(19) Europäisches Patentamt / European Patent Office / Office européen des brevets

(11) **EP 1 541 380 B1**

(12) **EUROPEAN PATENT SPECIFICATION**

(45) Date of publication and mention
of the grant of the patent:
**30.10.2013 Bulletin 2013/44**

(51) Int Cl.:
*B60C 11/12* (2006.01)   *B60C 11/03* (2006.01)
*B60C 11/00* (2006.01)   *B60C 11/01* (2006.01)
*B60C 19/00* (2006.01)

(21) Application number: **03795277.7**

(22) Date of filing: **01.09.2003**

(86) International application number:
**PCT/JP2003/011163**

(87) International publication number:
**WO 2004/024471 (25.03.2004 Gazette 2004/13)**

(54) **TIRE WITH ASYMMETRIC TREAD PATTERN AND METHOD OF MOUNTING THE TIRE**

REIFEN MIT ASYMMETRISCHEM PROFILMUSTER UND VERFAHREN ZUM AUFZIEHEN DES REIFENS

PNEU A STRUCTURE ASYMETRIQUE DE SCULPTURES ET PROCEDE DE MONTAGE DU PNEU

(84) Designated Contracting States:
**DE ES FR GB IT**

(30) Priority: **30.08.2002   JP 2002253645**
**30.08.2002   JP 2002254020**
**30.08.2002   JP 2002254053**
**30.08.2002   JP 2002254173**

(43) Date of publication of application:
**15.06.2005   Bulletin 2005/24**

(73) Proprietor: **Bridgestone Corporation**
**Tokyo 104-8340 (JP)**

(72) Inventors:
• **OHSAWA, Yasuo**
**c/o BRIDGESTONE CORPORATION**
**Kodaira-shi, Tokyo 187-8531 (JP)**
• **SAWADA, Takafumi**
**c/o BRIDGESTONE CORPORATION**
**Kodaira-shi, Tokyo 187-8531 (JP)**
• **SAGUCHI, Takanari**
**c/o BRIDGESTONE CORPORATION**
**Kodaira-shi, Tokyo 187-8531 (JP)**
• **FUJITA, Kazuto**
**c/o BRIDGESTONE CORPORATION**
**Kodaira-shi, Tokyo 187-8531 (JP)**
• **TOMITA, Arata**
**c/o BRIDGESTONE CORPORATION**
**Kodaira-shi, Tokyo 187-8531 (JP)**

(74) Representative: **Waldren, Robin Michael et al**
**Marks & Clerk LLP**
**90 Long Acre**
**London**
**WC2E 9RA (GB)**

(56) References cited:
EP-A- 1 029 712      JP-A- 3 220 004
JP-A- 6 048 120       JP-A- 06 048 120
JP-A- 08 048 113      JP-A- 08 085 308
US-A- 3 286 756       US-A- 5 213 641

**Description**

TECHNICAL FIELD

This invention relates to a tire suitable for use in a passenger car, and more particularly to a tire having a high resistance to hydroplaning on a wet road surface and a low tire noise and a method of mounting the same.

BACKGROUND ART

There are various articles as to a tire having an asymmetric tread pattern which designates directions to inner and outer sides of a vehicle when the tire is mounted on the vehicle.

For example, the commercially available tires having the asymmetric pattern are constituted by dividing functions so that a portion of a tread at an axially outer side of a vehicle with respect to an equatorial plane of the tire is applied to the improvement of a steering performance and the remaining portion at axially inner side is applied to the improvement of drainage property as disclosed in a non-patent document 1. As a general constituting method, a ratio of groove area in a tread contacting face or a negative ratio is made small to make large a block rigidity in the axially outer side of the tread mounted on the vehicle, while the negative ratio is made large to make small the block rigidity in the axially inner side.

Also, as shown in "Monthly Tire, March of 2003, New product highlights", there is an example that it is attempted to improve conflicting performances such as wet performance, noise through columnar resonance and wear at axially outer side of the vehicle by arranging one circumferential main groove in the axially outer side region of the tread mounted on the vehicle and two circumferential main grooves and slant grooves in the axially inner side region. In this example, the general running performances on a wet road  surface are considered as to the wet performance, and the resistance to hydroplaning is not particularly mentioned.

However, as the performances of the tire having the above construction are evaluated at a state of actually using the tire, that is, at a state of mounting the tire onto a vehicle, there is frequently caused a problem that the control of tire noise and the resistance to hydroplaning can not be established.

Moreover, the wet performance is disclosed in the examples of JP-A-10-217719, but a case of causing the hydroplaning phenomenon is generally a case of a deep water depth, which is elucidated to be not included in the general wet road surface disclosed in this example.

Attention is drawn to the disclosures of JP 3220004 and JP6048120.

DISCLOSURE OF THE INVENTION

The invention is made for solving the problems of the conventional technique and is to propose a technique for simultaneously establishing the improvement of the resistance to hydroplaning and the control of the tire noise, which has hitherto been a conflicting relation, in a high dimension.

The inventors have minutely examined the case that the control of the tire noise and the resistance to hydroplaning can not be established and confirmed that the common feature in both the performances is a point that a camber to ground is applied to the tire mounted on the vehicle and a ground contact shape of the tire is different from a case that a camber to ground is 0°. That is, the conventional technique has a problem in a point that the tire performances are not optimized at a state of mounting on the vehicle.

Further, the inventors have made various studies with respect to means for ensuring the stability of the vehicle on a dry road surface and the wear resistance in addition to the improvement of the resistance to hydroplaning and the control of the tire noise. That is, the inventors have noticed a state of actually using and mounting the tire on the vehicle, particularly a posture of the tire mounted (camber angle, toe-in and the like) and a ground contact shape at this state and a drainage and water flow (flow line) and analyzed them in detail and obtained knowledge of the following items (a) -(d).

(a) The tire is mounted at a slight toe-in or negative camber in almost all of vehicles;

(b) As a result, a long ground contact portion moves from an equatorial plane of the tire toward an axially inner side to the vehicle, so that in order to improve the steering stability, it is required to form a pattern having a large rigidity in a widthwise direction of the tire in a middle between a tread center portion (maximum belt tension portion) and a portion having a maximum peripheral length of the tread contacted with ground from a viewpoint of ground contact area and belt rigidity;

(c) Since the belt rigidity is high in the tread center portion, circumferential strain produced during the rotation of the tire is large in a land part having a high rigidity in the widthwise direction of the tire, and the wear resulted from the releasing of the strain becomes large at the trailing. In order to avoid such a phenomenon, it is required to establish the rigidity in the widthwise direction of the tire and the escape of rubber in the circumferential direction; and

(d) The contribution of the circumferential groove to the resistance to hydroplaning or drainage property becomes maximum at a portion of the tread having a maximum ground contact length in the circumferential direction. Therefore, in order to establish the resistance to hydroplaning and the steering stability, it is effective that the position of the land part and the position of the circumferential groove are displaced in relation with the above item (a), and the circumferential groove located at the axially inner side with respect to the equatorial plane of the tire in the mounting on the vehicle is made wider; and derived means for ensuring the stability of the vehicle and the wear resistance on the dry road surface.

Moreover, the inventors have examined the uneven wear of a shoulder portion of the tire located at axially inner side with respect to the vehicle in the mounting on the vehicle and derived means for controlling the uneven wear.

The invention is made based on the above knowledge.

That is, the summary and construction of the invention are as follows.

(1) A tire having an asymmetric tread pattern according to claim 1.

(2) A tire having an asymmetric tread pattern according to the item (1), wherein one circumferential groove is arranged in the axially outer side region and the circumferential groove arranged in the axially inner side region and nearest to the equatorial plane of the tire has a width corresponding to 120-145% of the average groove width.

(3) A tire having an asymmetric tread pattern according to the item (1), wherein two circumferential grooves are arranged in the axially outer side region and the circumferential groove arranged in the axially inner side region and nearest to the equatorial plane of the tire has a width corresponding to 130-160% of the average groove width.

(4) A tire having an asymmetric tread pattern according to the item (1), wherein the fine groove has an inclination angle of 5-55° with respect to the widthwise direction of the tire.

(5) A tire having an asymmetric tread pattern according to the item (1) or (4), wherein the fine groove is opened at the surface of the tread.

(6) A tire having an asymmetric tread pattern according to the item (1), (4) or (5), wherein an opening width of the fine groove is not more than 2 mm.

(7) A tire having an asymmetric tread pattern according to the item (1) or (5), wherein the fine groove is closed at the surface of the tread.

(8) A tire having an asymmetric tread pattern according to any one of the items (1) to (3), wherein a rib-like land part extending along the equatorial plane of the tire is arranged on or in the vicinity of the equator of the tire sandwiched between the circumferential grooves, and the rib-like land part has a center in the widthwise direction of the tire positioned from the equatorial plane of the tire toward a side of elongating a circumferential length of a ground contact area of the tread when a negative camber is applied to the tire  and is provided with plural ellipsoidal recessed dimples having a major axis in a direction crossing with the equatorial plane of the tire, and further a circumferential groove located at the side of elongating the circumferential length of the ground contact area of the tread among the two circumferential grooves sandwiching the rib-like land part has a wide-width.

(9) A tire having an asymmetric tread pattern according to the item (8), wherein the major axis of the dimple has an inclination angle of 5-45° with respect to the widthwise direction of the tire.

(10) A tire having an asymmetric tread pattern according to any one of the items (1) to (3), wherein a total volume of lateral grooves, which may be formed in a land part at the axially inner side in the mounting on the vehicle among the land parts defined between the circumferential groove and the tread end, per a unit width in the widthwise direction of the tread over a full circumference of the tread is made smaller than a similar total volume in the land part at the axially outer side in the mounting on the vehicle.

(11) A tire having an asymmetric tread pattern according to the item (10), wherein plural holes separated from the circumferential groove and having a maximum depth corresponding to not less than 1/3 of a depth of the circumferential groove are formed in the land part at the axially inner side in the mounting on the vehicle, and a volume of concave portion in a zone ranging from a line passing through a center of such a land part in the widthwise direction of the tread to the side of tread end is made larger than a volume of concave portion in a zone ranging from the line passing through the center in the widthwise direction toward a side opposite to the tread end.

(12) A tire having an asymmetric tread pattern according to the item (10) or (11), wherein the land part at the axially inner side in the mounting on the vehicle is divided by a fine-width circumferential groove into a widthwise outer portion and a widthwise inner portion, and a width of the widthwise outer portion is made narrower than the widthwise inner portion and is not more than 1/10 of a tread width.

(13) A tire having an asymmetric tread pattern according to the item (12), wherein at least one of curvature centers of curves constituting a profile of a side face of the widthwise outer portion in the tread at a section in the widthwise direction of the tire is positioned at an outer side of the tire, and a curvature center of a curve constituting a profile of the widthwise inner portion is positioned at an inner side of the tire.

(14) A tire having an asymmetric tread pattern according to any one of the items (10) to (13), wherein a width of the fine-width circumferential groove is gradually widened from a groove bottom toward a side of the surface of the tread.

(15) A tire having an asymmetric tread pattern according to any one of the items (10) to (14), wherein at least a part of a zone having plural holes in the land part at the axially inner side mounted on the vehicle is contacted with ground under an action of a load corresponding to not less than 70% of a maximum load capacity of the tire.

(16) A tire having an asymmetric tread pattern any one of the items (10) to (15), wherein an opening size of the hole in the land part at the axially inner side mounted on the vehicle is made large toward a direction separating away from the equatorial plane of the tire.

(17) A tire having an asymmetric tread pattern according to any one of the items (10) to (16), wherein a distance among the plural holes in the land part at the axially inner side mounted on the vehicle is made smaller toward a direction separating away from the equatorial plane of the tire.

(18) A tire having an asymmetric tread pattern according to any one of the items (10) to (17), wherein a depth of the hole in the land part at the axially inner side mounted on the vehicle is made deeper toward a direction separating away from the equatorial plane of the tire.

(19) A tire having an asymmetric tread pattern according to any one of the items (1) to (3), wherein when the tire is mounted on a wheel in which a transmission ratio of a radial force input to one end portion of a rim in the widthwise direction toward an axle is larger than the similar transmission ratio of a force input to the other end portion of the rim in the widthwise direction, a total volume of lateral grooves, which may be formed in a land part located at a side of large transmission ratio mounted on the wheel among the land parts defined between the circumferential groove and the tread end, per unit width in the widthwise direction of the tread over a full circumference of the tread is made smaller than the similar total volume of lateral grooves formed in the land part located at the side of the other tread end, and the land part located at a side of large transmission ratio is divided by a fine-width circumferential groove into a widthwise outer portion and a widthwise inner portion , and a plurality of holes separated from the circumferential groove and the lateral grooves are formed in the widthwise inner portion.

(20) A tire having an asymmetric tread pattern according to the item (19), wherein a width of the fine-width circumferential groove is gradually widened from a groove bottom toward a side of a surface of the tread.

(21) A tire having an asymmetric tread pattern according to the item (19) or (20), wherein an opening size of each of the plural holes formed in the widthwise inner portion is made larger toward a direction separating away from the equatorial plane of the tire.

(22) A tire having an asymmetric tread pattern according to any one of the items (19) to (21), wherein a distance among the mutually plural holes formed in the widthwise inner portion is made smaller toward a direction separating away from the equatorial plane of the tire.

(23) A tire having an asymmetric tread pattern according to any one of the items (19) to (22), wherein a depth of each of the plural holes formed in the widthwise inner portion is made deeper toward a direction separating away from the equatorial plane of the tire.

(24) A tire having an asymmetric tread pattern according to any one of the items (19) to (23), wherein at least a part of a zone having plural holes in the widthwise inner portion is contacted with ground under an action of a load corresponding to not less than 70% of a maximum load capacity of the tire.

(25) A tire having an asymmetric tread pattern according to any one of the items (19) to (24), wherein at least one of curvature centers of curves constituting a profile of a side face of the widthwise outer portion in the tread at a section in the widthwise direction of the tire is positioned at an outer side of the tire, and a curvature center of a curve constituting a profile of the widthwise inner portion is positioned at an inner side of the tire.

(26) A tire having an asymmetric tread pattern according to any one of the items (1) to (3), wherein an effective ground contact area of either axially inner side or axially outer side at a state that the tire is assembled on an approved rim and filled with a normal air pressure and loaded under a mass corresponding to a maximum load capacity is made larger than that of the other side, and a radial distance from a tangential line on an outer surface of the tread perpendicular to the equatorial plane of the tire to each of tread ground contact edges at a posture of filling the normal air pressure is made larger in the side having a small effective ground contact area than in the other side.

(27) A tire having an asymmetric tread pattern according to the item (26), wherein a relation between a ratio of large and small of the effective ground contact area (S-large/S-small) and a ratio of large and small of the radial distance (H-large/H-small) is (S-large/S-small) = A x (H-large/H-small) in which A is 1.0-1.4.

(28) A method of mounting a tire having an asymmetric tread pattern on a vehicles through a suspension giving a negative camber at full time or as needed, which comprises taking a tire as claimed in any one of the items (1) to (27) in a use form that a circumferential groove formed in an axially inner side region with respect to an equatorial plane of the tire in the mounting on a vehicle and nearest to the equatorial plane overlaps with such a position that a circumferential length of a tread ground contact region when a negative camber is applied to the tire.

In the invention, the term "circumferential groove" used herein is a groove extending in the circumferential direction of the tread and having a width corresponding to not less than 2.5% of a tread width.

Also, the term "lateral groove" used in the item (10) means a groove having an inclination angle of not less than 20° with respect to the circumferential direction of the tread.

Furthermore, the term "volume of concave portion" used in the item (10) is an integration value of all volumes of circumferential groove, lateral grooves and holes in each region over a full circumference of the tire.

Similarly, the term "tread width" used in the item (11) means a ground contact width when the tire is assembled on an approved rim and filled under a normal air pressure and loaded under a mass corresponding to a maximum load capacity. In this case, the term "approved rim" means a rim defined in the following standard, and the term "maximum load capacity" means a maximum mass allowed to apply load to the tire according to the following standard, and the term "normal air pressure" means an air pressure defined in correspondence with the maximum load capacity according to the following standard.

The standard is decided by an industrial standard effective in the production of tires or areas using the same. For example, there are "Year Book of The Tire and Rim Association Inc." in USA, "Standard Manual of The European Tire and Rim Technical Organization" in Europe, and "JATMA Year Book" of The Japan Automobile Tire Manufacturers Association Inc. in Japan.

In this specification, rib-shaped land part and block-shaped land part row give a generic name as a land part without distinguishing them.

As the hydroplaning phenomenon is analyzed in various tires as a numerical value to conduct detail examinations, it has been confirmed that the direction of the groove capable of improving the drainage property is a water flowing direction (flow line direction), and this flow line direction is substantially the same as a direction of normal line of the ground contact form. For this end, the circumferential groove contributes to the improvement of the drainage property in the vicinity of the tread center during the straight running, while the widthwise groove contributes to the improvement of the drainage property in the vicinity of the ground contact end in the widthwise direction of the tread. Also, noting on the front wheel being important in the resistance to hydroplaning, it has been confirmed that the load increases at the braking and the suspension is stroked, and hence the negative camber is easily applied. In this case, it has been found that a widthwise position of the tire directing the normal line of the ground contact form into the circumferential direction moves toward the axially inner side at the mounting of the tire on the vehicle. Therefore, it has newly been found that the drainage property can be more improved by arranging the circumferential groove at the axially inner side.

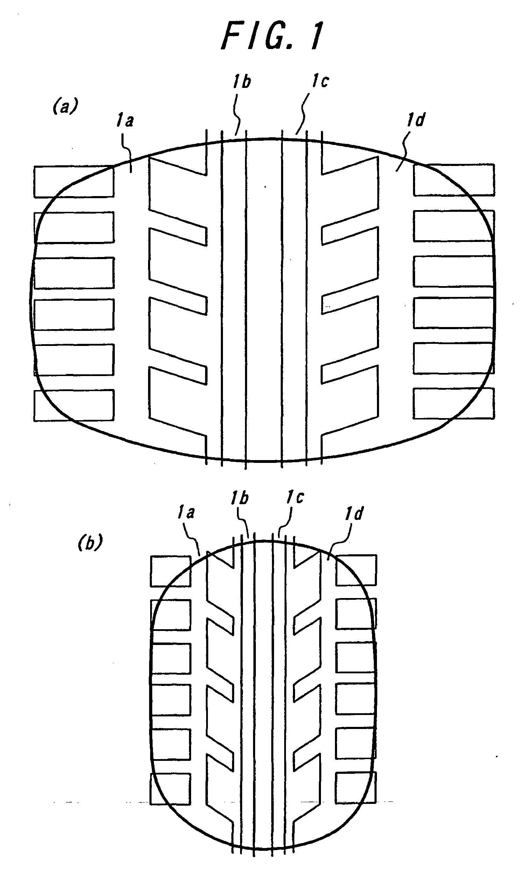

As various tires having different flatness ratios and hence different ground contact forms are observed, when maximum width and maximum circumferential length in the ground contact form are compared under actually used conditions, it has been found that as the ground contact form is shown by a thick solid line on a tread pattern having circumferential grooves 1a-1d in FIG. 1, when the maximum width of FIG. 1(a) is larger than the maximum circumferential length, the circumferential grooves drain a greater amount of water as compared with the opposite case shown in FIG. 1(b). That is, in the illustrated embodiment, the four circumferential grooves 1a-1d of FIG. 1(a) attains 80% of the whole drainage amount, while the drainage amount in total of the circumferential grooves 1a-1d of FIG. 1(b) is 60% of the whole.

Therefore, in case of the tire shown in FIG. 1(a) in which the maximum ground contact width is larger than the maximum circumferential length, the drainage property can be improved to improve the resistance to hydroplaning by making the number of the circumferential grooves large in the vicinity of the tread center portion.

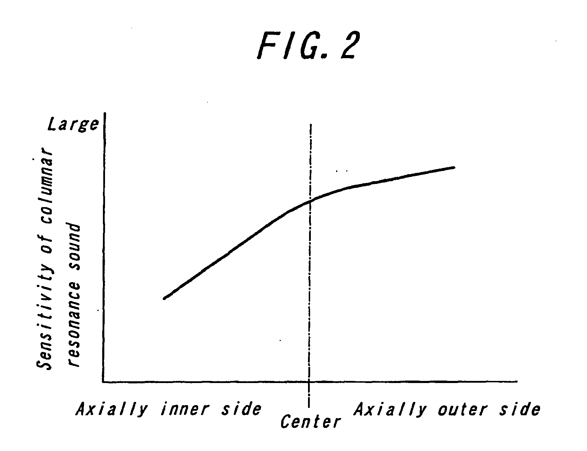

On the other hand, the circumferential groove forms a pipe having the same length as the ground contact length with a road surface, and the resulting pipe is a noise source being a columnar resonance which generates a sound as in a whistle. With respect to tires in which one circumferential groove is arranged in various positions in the widthwise direction of the tire, as the results measured on the columnar resonance sound are shown in FIG. 2, it is found that even when the section and width of the groove (pipe section) and the ground contact length (pipe length are the same, the magnitude or sensitivity of the columnar resonance sound differs in positions in the widthwise direction of the tire. This sensitivity is low at the axially inner side of the tread and becomes maximum at the axially outer side. The decrease of the sensitivity from the tread center toward the axially inner side is larger than the increase of the sensitivity from the tread center toward the axially outer side.

As seen from the above, in order to improve the resistance to hydroplaning, it is effective to properly utilize the circumferential groove(s), and in order to reduce the noise from the groove, it is better to arrange a greater number of the grooves at the axially inner side from the tread center.

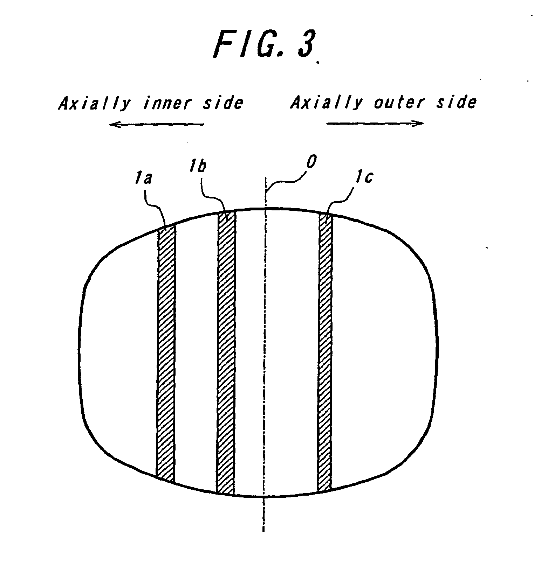

A typical example of the tread pattern according to the invention based on the above knowledge is shown in FIG. 3.

That is, this tread pattern has at least two circumferential grooves, two circumferential grooves 1a and 1b in the illustrated embodiment in a region from an equatorial plane O of the tire to an axially inner side during the mounting on a vehicle, and at least one circumferential groove, one circumferential groove 1 c in the illustrated embodiment in a region to an axially outer side.

In this case, it is important that the circumferential groove 1b arranged nearest to the equatorial plane O of the tire among the circumferential grooves 1a and 1b arranged in the region to the axially inner side has a width wider by 20% or more than an average groove width defined by dividing a total groove width of the tire (total width of the circumferential grooves arranged in the tread) by the number of the circumferential grooves, and the circumferential groove 1a arranged toward a side of a tread end in the region of the axially inner side has a width corresponding to 90-110% of the average groove width, and the circumferential groove 1c in the region of the axially outer side has a width narrower by 10% or more than the average groove width.

That is, since the amount of water reserved in a central region in the widthwise direction of the tread per unit ground contact width is larger by 20% or more than that in a region adjacent thereto, the drainage property is considerably improved by making the width of the circumferential groove 1b nearest to the equatorial plane of the tire by 20% or more than the average groove width. Moreover, when the groove width of the circumferential groove 1b is widened exceeding the 100% of the average groove width, it is feared that it is difficult to conduct drainage due to the crushing of the central portion of the circumferential groove 1b in the contact with ground, so that it is preferable that the upper limit of the increase of the groove width is 100% of the average groove width.

On the other hand, since the circumferential groove 1c arranged in the axially outer side is high in the sensitivity to the columnar resonance, the groove width is made narrower by 10% or more than the average groove width, whereby the ability of controlling the noise can be improved with the inclusion of widening the width of the circumferential groove 1b and further 1a. Moreover, when the width of the circumferential groove 1c is less than 3 mm, there is a fear not developing the function as a groove, so that the lower limit is preferable to be 3 mm.

Since the circumferential groove 1a located at a side of the shoulder in the axially inner side in the mounting is low in the sensitivity to the columnar resonance, even if the groove width is widened or narrowed, the influence on the noise is less. In order to more improve the resistance to hydroplaning under a negative camber in the braking, therefore, it is sufficient to make the groove width wider to 10% than the average groove width. On the other hand, in order to improve the resistance to hydroplaning in the straight running, it is better to make the groove width narrower to 10% than the average groove width so as to improve the drainage property together with the groove of the axially outer side. In other words, when the width of the circumferential groove at the axially outer side in the mounting on the vehicle is made to about 10% reduced from the average groove width, the drainage property at the axially outer side can be improved as compared with the case of being made narrower than 10% in similar way.

When the difference between the maximum ground contact width and the ground contact length in the circumferential direction is small, or when the ground contact form is horizontally somewhat long, for example, if the flatness ratio of the tire is high or the load bearing is large, the drainage efficiency of the circumferential groove becomes small as compared with the case that the maximum ground contact width is larger than the ground contact length in the circumferential direction. In other words, the drainage efficiency of the circumferential groove becomes large in case that the ground contact form is extremely horizontally long. Also, since the sensitivity to the columnar resonance is large in the axially outer side, it is frequent that when the number of the circumferential groove is one in the region of the axially outer side, the resistance to hydroplaning and the noise performance are improved. In this case, the amount of water reserved in the central region per unit ground contact width is larger by 20-45% than that in the adjacent region, so that the resistance to hydroplaning can be further improved by making the width of the circumferential groove 1b at the axially inner side wider by 20-45% than the average groove width.

Also, when the difference between the maximum ground contact width and the circumferential ground contact length is large or the ground contact form is horizontally long, for example, if the flatness ratio of the tire is low or the load bearing is small, the drainage efficiency of the circumferential groove becomes large as compared with the case that the difference between the maximum ground contact width and the circumferential ground contact length is small. For this end, the resistance to hydroplaning can be more effectively improved when two circumferential grooves are arranged at the axially outer side. Also, the amount of water reserved in the central region per unit ground contact width is larger by 25-55% than that in the adjacent region, so that the resistance to hydroplaning can be further improved by making the width of the circumferential groove 1b at the axially inner side wider by 25-55% than the average groove width.

Next, the method of actually mounting the tire having the above tread pattern on a vehicle will be described in detail.

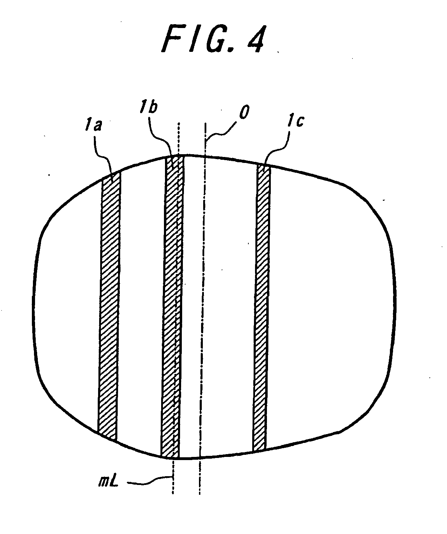

In case of using at a state of applying a negative camber during the mounting on the vehicle, or in case of using at a state of applying a negative camber by a change of a load such as change of person(s) and goods ridden, change of braking or traction force or the like, the ground contact length in the ground contact form becomes long at the axially inner side than at the equatorial plane of the tire. In this case, the drainage efficiency of the circumferential groove becomes maximum at such a position that the ground contact length is maximum, and further this position is a position in which the sensitivity to columnar resonance becomes low at an inner side from the equatorial plane of the tire as previously mentioned. Therefore, it is advantageous to provide a mounting posture so that the above width-widened circumferential groove 1b overlaps with a position mL in which the circumferential length of the tread ground contact region becomes maximum when a negative camber is applied to the tire as shown in FIG. 4. In this case, the "overlapping" means an arrangement that the position mL is included in the circumferential groove 1b, and it is not necessarily required that the position mL is existent in the widthwise center of the circumferential groove 1b.

It is possible to simultaneously establish the improvement of the resistance to hydroplaning and the reduction of columnar resonance noise by the above mounting of the tire.

Then, there is described a high-running performance tire ensuring the stability of the vehicle on a dry road surface and the wear resistance while highly maintaining the resistance to hydroplaning on a wet road surface.

In the radial tire, it is effective to increase the strengths of the tread portion and the belt portion located inside the tread portion through flatening of the tire for enhancing the high-speed running performance, but in order to provide the steering stability on the wet road surface on such a tire, it is required to enhance the drainage property on the width-widened tread portion based on the flatening. In this case, in order to enhance the so-called resistance to hydroplaning, it is attempted to raise the drainage efficiency by lowering the ground contact ratio of the land part of the tread, or arranging a wide-width circumferential groove in the widthwise central part of the tread portion along a direction of flowing water (flow line) in the drainage, or arranging slant grooves extending in an oblique direction with respect to the equator of the tire so as to match with the slant flow line in the shoulder portion.

On the other hand, a rib-based tread pattern in which grooves and the like are not too arranged in the tread center portion is adopted for utilizing high belt tension and high rigidity in the center portion through so-called hoop effect as is expected to develop gripping force and steering stability in case of running at high speed on the dry road surface or the like.

Therefore, it is present status that the drainage property on the wet road surface is conceivably conflicting with the gripping force and steering stability in case of running at the high speed on the dry road surface or the like. In addition, there is a problem that since the tread center portion is high in the belt rigidity as previously mentioned, strain in the circumferential direction of the tread center portion accompanied with the rotation becomes excessive to easily cause preferential wearing of the center portion, i.e. so-called center wearing.

Under such a situation, it is present to design a tread pattern capable of actually temporizing the aforementioned various performances. However, there can not be obtained results satisfying the performances as far as possible.

In the invention, therefore, the means for highly establishing the resistance to hydroplaning and the steering stability and wear resistance, which are conflicting relation in the conventional technique, is established as shown in the above items (4) -(9).

This means is described in detail with reference to the drawings below.

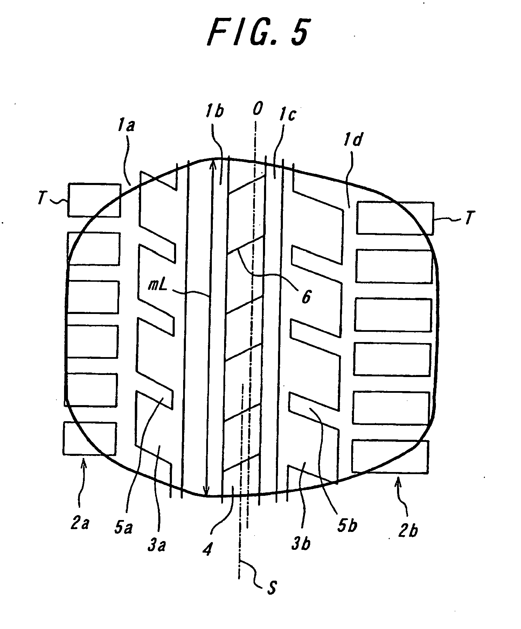

FIG. 5 is a tread pattern for a passenger car tire according to the invention. The tread of this embodiment comprises four circumferential grooves 1a-1d extending along an equatorial plane O of the tire, among these circumferential grooves 1a-1d and tread ends T are defined land parts 2a and 2b each consisting of blocks toward both sides of the tread ends T, land parts 3a and 3b located at inner sides in the widthwise direction of the tire, and a rib-shaped land part 4 on the equatorial plane O of the tire.

Also, the land parts 3a and 3b have slant grooves 5a and 5b extending obliquely with respect to the equatorial plane O of the tire and opening to an outside in the widthwise direction of the tire. Furthermore, the rib-shaped land part 4 has a plurality of fine grooves 6 extending across the equatorial plane O of the tire.

As a ground contact form when a negative camber is applied to the tire is shown by a thick solid line in FIG. 5, it is important that a center S of the rib-shaped land part 4 in the widthwise direction of the tire is positioned from the equatorial plane O of the tire toward such a side that a circumferential length of a tread ground contact region is elongated when the negative camber is applied to the tire (a side of existing a position mL of a maximum ground contact length of the tread).

That is, the rib-shaped land part 4 can be arranged in a high belt rigidity portion of producing a high belt tension through the aforementioned hoop effect at the tread center portion and of enlarging a ground contact area through the elongation of the ground contact length, which is effective to largely enhance the steering stability.

Also, it is required to arrange the fine grooves 6 in the rib-shaped land part 4 so as not to concentrate the wearing in the rib-shaped land part 4 existing in the tread center portion through the high belt rigidity. That is, the circumferential strain accompanied with the rotation of the tire can be mitigated by the fine grooves 6, so that the wearing is suppressed in the release of strain produced in the leading time.

On the other hand, the formation of the fine grooves 6 brings about the lowering of the rigidity in the rib-shaped land part 4 in the widthwise direction of the tire, so that it is required to suppress the lowering of the gripping force to a minimum level by establishing the mitigation of strain in the ground contacting and the rigidity in lateral direction. That is, the fine groove 6 is advantageous to have a portion extending in a direction inclined with respect to a radial direction of the tire tread so that the lateral rigidity can be held in the ground contact region while land parts defined by the fine grooves 6 escape in the circumferential direction and interfere with each other in the widthwise direction.

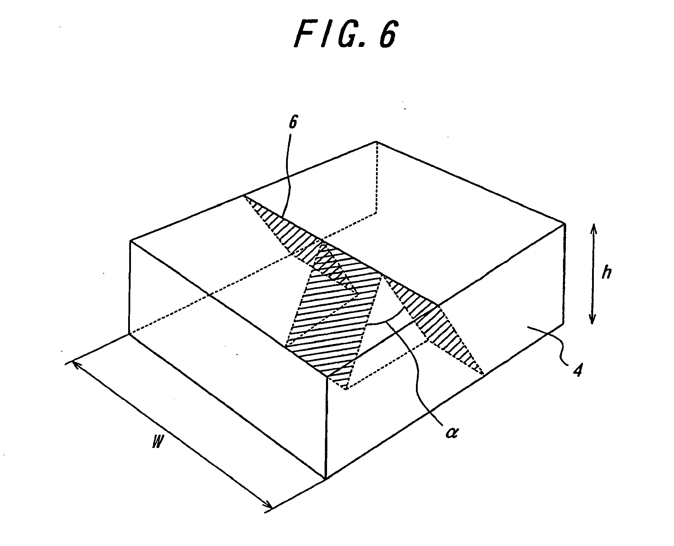

In this case, the feature that the fine groove 6 has a portion extending in a direction inclined with respect to a radial direction of the tire tread means that the fine groove 6 is not uniformly extended in the radial direction and widthwise direction of the tire. Concretely, it is preferable that as a steric view of the fine groove 6 in a depth direction of the rib-shaped land part 4 is shown in FIG. 6, the fine groove 6 is divided into, for example, three segments and the cut of each segment in the depth direction is inclined with respect to the radial direction of the tire and directions of the adjoining segments are opposite to each other. In this case, an angle $\alpha$ defined between the cuts of the segments is advantageous to be within a range of 5-30°.

In addition to the fine groove 6 having the cut inclined with respect to the radial direction of the tire tread as shown in FIG. 6, the cut may be extended in the inclination direction with respect to the radial direction of the tire while twisting, or the cut from the surface of the tread may be extended in a different direction on a halfway, or the cut from the surface of the tread may be divided into plural sections in the widthwise direction on a halfway and the extending directions may be made different among the divided sections. In brief, it is a basis that each of the fine grooves is discontinuous in the widthwise direction of the tire.

Because, the formation of the fine groove 6 extended in such a direction escapes the strain in the circumferential direction, while it is avoided to continue the groove in the widthwise direction of the tire, and as a result, the deformation of the fine groove can be suppressed to ensure the rigidity by the interference through adjoining walls defined and regulated in the widthwise direction of the tire.

Thus, the conflicting performances among the resistance to hydroplaning, steering stability and wear resistance, which have hardly been established, can be established in a high dimension.

Also, it is preferable that the fine groove 6 is inclined within a range of 5-55° with respect to the widthwise direction of the tire in order to make small a so-called pattern noise produced by contacting the land part with ground at the leading during the running of the tire. That is, when the angle is less than 5°, there is a fear that the fine groove is periodically coincident with a line of the ground contact form during the rotation of the tire to result in the occurrence of a large pattern noise. While, when it exceeds 55°, there is a fear that the rigidity of the rib-shaped land part 4 in the widthwise direction lowers to badly exert on the steering stability.

Furthermore, the fine groove 6 is preferable to be opened at the surface of the tread from a viewpoint of controlling the wear of the tread center portion. Concretely, when the opening width is not more than 2 mm, the effect of reducing the strain in the circumferential direction can be sufficiently developed.

Similarly, the fine groove is preferable to be closed at the surface of the tread from a viewpoint of improving the steering stability.

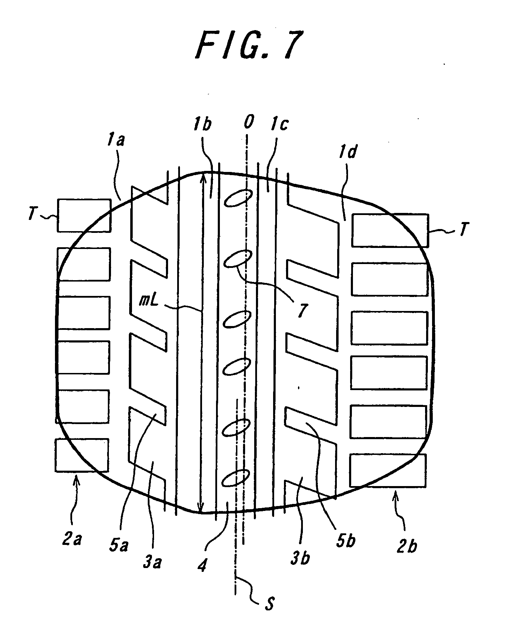

Moreover, the same function and effect as in the fine groove 6 can be obtained by forming ellipsoidally recessed dimples 7 having an major axis in a direction crossing the equatorial plane O of the tire instead of the fine grooves 6 as shown in FIG. 7. In this case, a center of the major axis of the dimple 7 is preferable to be made coincident with the center of the rib-shaped land part 4 in the widthwise direction of the tire.

Further, there is described a case that a technique of suppressing the uneven wear is further applied to the tire highly maintaining the resistance to hydroplaning on the wet road surface and reducing the noise according to the above.

In general, there is frequently caused a case that the wearing of a portion corresponding to the axially inner side at the state of mounting on the vehicle comes into problem in the front wheel of the pneumatic tire. This is based on a large factor that the load of the front wheel in the braking is increased to increase the alignment of the front wheel at a negative camber and a toe-out in addition to the fact that the setting of the vehicle itself to the negative camber is relatively much.

In case of the negative camber, a ground contact length of the shoulder portion at the axially inner side becomes longer than a ground contact length of the outer side, so that if a slight slip angle of toe-in or toe-out is applied at this state, the lateral slippage of the tire becomes large and the shoulder portion at the axially inner side excessively bears the lateral force, which is a factor of causing uneven wear that the shoulder portion at the axially inner side is much worn as compared with the shoulder portion at the axially outer side.

Also, a longitudinal deflection of the shoulder portion at the axially inner side becomes larger than that of the shoulder portion at the axially outer side, so that the width is widened and the width-widened region is drawn to receive force in the braking direction, which is also a factor of causing the uneven wear.

Furthermore, the shoulder portion at the axially inner side is large in the deflection as compared with the shoulder portion at the axially outer side and becomes small in the rotating radius, which is drawn to receive force in the braking direction. The bearing of this force becomes larger in a region near to the ground contact end and a nucleus for uneven wear is easily produced in this region.

Thus, the uneven wear produced in the shoulder portion at the axially inner side is hardly observed and noticed at a state of mounting on the vehicle by a driver, so that if the uneven wear is left to stand without a proper treatment, it progresses and finally is feared to be a cause of troubles such as tire burst and the like.

In the invention, therefore, means for effectively suppressing the uneven wear of the shoulder portion at the axially inner side after the mounting on the vehicle is established as described in the items (10) -(18).

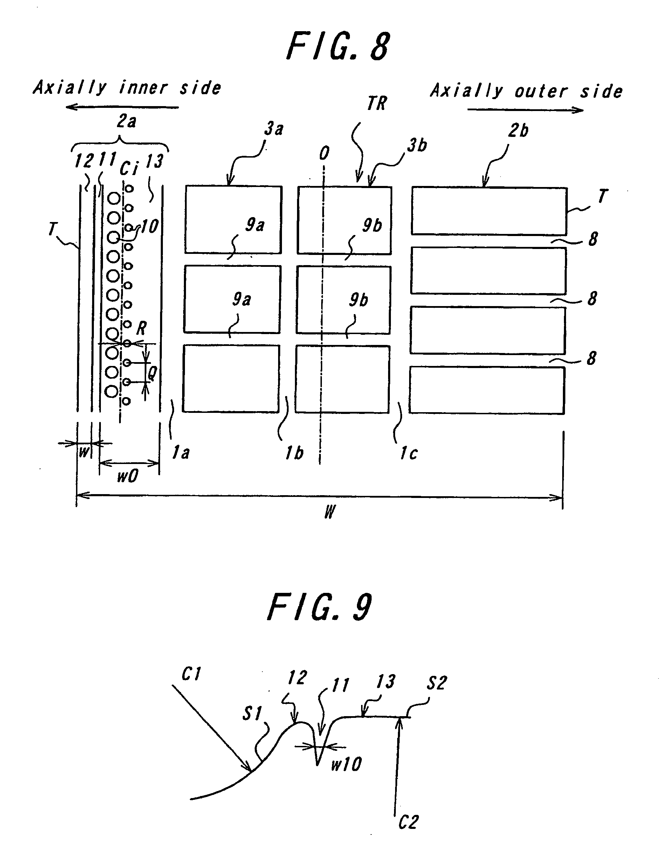

This means is described with reference to the drawings in detail. Moreover, the drawings on and after FIG. 8 mainly explain the land part construction and do not accurately show the width of the circumferential groove. The groove width may be properly changed under the features of the invention.

That is, FIG. 8 is a developed view of a tread pattern shown by a front view of a tire at a posture of mounting on a vehicle. The interior structure of this tire is the same as in the general radial tire and an illustration thereof is omitted here. In a tread TD are arranged at least two circumferential grooves, three circumferential grooves 1a, 1b and 1c in the illustrated embodiment continuously extending in a circumferential direction. As to land parts 2a and 2b defined by the circumferential grooves 1a, 1c and a tread end T, the land part 2a located at an axially inner side mounted on the vehicle is rendered into a rib, and the land part 2b located at an axially outer side mounted on the vehicle is rendered into a land part row of blocks defined by lateral grooves 8, whereby a total volume of lateral grooves, which may be formed in the land part 2a (lateral groove is not formed in the illustrated embodiment), per unit width in a widthwise direction of the tread over a full circumference of the tread is made smaller than a total volume of lateral grooves 8 formed in the land part 2b at a side of the other tread end and hence the rigidity in the circumferential direction of the land part is made larger in the land part 2a than in the land part 2b. Moreover, lateral grooves 9a and 9b are formed in the other two land part rows 3a, 3b defined by the three circumferential grooves, but it is not limited to the illustrated embodiment.

Further, a plurality of holes 10 separated from the circumferential groove 1a are formed in the land part 2a, whereby a volume of concave portion in a zone ranging from a widthwise center line Ci of the land part 2a to the side of the tread end T is made larger than a volume of concave portion in a zone ranging from the center line Ci to a side opposite to the tread end T.

According to this, the rigidity in the circumferential direction of the land part 2a is made larger than the rigidity in the circumferential direction of the land part 2b, whereby the land part 2 a is subjected to a compression deformation in the ground contact face to prolong the ground contact length and the lateral grooves are contracted to make the rotating radius small and a force opposite to the forward running direction of the vehicle, i.e. a braking force is applied to the shoulder portion of the land part 2a having a large rotating radius, and hence there can be prevented the occurrence of uneven wear.

In this case, the term "lateral grooves, which may be formed in the land part 2a" includes a case that the lateral grooves are not formed as in the illustrated embodiment. In the latter case, the total volume of the lateral grooves is naturally zero.

Although the land part 2a is not provided with the lateral grooves in the illustrated embodiment, the lateral grooves may be formed in the land part 2a at the number smaller than in the land part 2b under a condition that the rigidity in the circumferential direction is large as compared with the land part 2b.

In such a case, by reducing the number of the lateral grooves in the land part 2a can be made less the geometrically discontinuous portion in the circumferential direction to suppress a heel and toe wear as an non-uniform wear in the circumferential direction.

Also, lateral grooves 9a, 9b are formed in the two land part rows 3a, 3b defined by the three circumferential grooves 1a, 1b and 1c at an inside from the land parts 2a, 2b in the widthwise direction, respectively, in which edges of these grooves can be effectively contributed to increase of braking force and traction force and also the drainage performance in the central region of the tread can be improved.

On the other hand, the hole 10 decreases the shear rigidity of a zone provided with the holes to make the bearing of this zone on lateral force small and suppress the occurrence of reaction force. Also, even if the zone is drawn in the braking direction, the occurrence of reaction force to the braking force can be suppressed to control the occurrence of uneven wear.

Furthermore, a maximum dept h of the hole 10 is made to not less than 1/3 of a depth of the circumferential groove 1a, 1b, 1c, whereby the effect of suppressing the occurrence of uneven wear by the arrangement of the holes 10 can be ensured even if the wearing of the tire progresses. Moreover, if the depths of the circumferential grooves 1a, 1b, and 1c are different, the definition of depth of the hole 10 is based on the depth of the circumferential groove adjacent thereto (1a in the illustrated embodiment). On the other hand, the upper limit of the maximum depth of the hole 10 is preferable to be a depth arriving at a radially outside of 1 mm from an outermost layer of a belt for ensuring a rubber gauge between the belt layer and the groove bottom. Incidentally, as to the depths of the circumferential grooves 1a, 1b and 1c, it is desirable that the circumferential grooves 1a and 1b are deepened for improving the resistance to hydroplaning during the straight running, while the circumferential groove 1c is deepened for improving the resistance to hydroplaning during the cornering.

Further, the volume of the concave portion is made larger in the zone ranging from the center line Ci of the land part 2a at the axially inner side to the side of the tread end than in the zone ranging from the center line Ci to the side opposite to the tread end, whereby the effect of suppressing the uneven wear can be enhanced in the zone side the tread end easily causing the uneven wear.

Preferably, the land part 2a at the axially inner side mounted on the vehicle is divided by a fine-width circumferential 11 into a widthwise outer portion 12 and a widthwise inner portion 13 in the tread, and a width w of the widthwise outer portion 12 is made narrower than a width w0 of the widthwise inner portion 13 and is not more than 1/10 of a tread width W.

Thus, the widthwise outer portion 12 in the vicinity of the ground contact end most easily causing the uneven wear is separated from the widthwise inner portion 13, whereby the growth of wear from the outer portion to the inner portion can be suppressed. Also, the width W of the widthwise outer portion 12 is made narrower than the width w of the widthwise inner portion 13 and is not more than 1/10 of the tread width W, whereby the volume of uneven wear can be decreased to maintain a good appearance.

Preferably, as shown in FIG. 9, at least one curvature center C1 among curvature centers of curves constituting a profile S1 of a side face of the widthwise outer portion 12 at a section in the widthwise direction of the tire is positioned at an outer side of the tire for the profile S1, while a curvature center C2 of a curve constituting a profile S2 of the widthwise inner portion 13 is positioned at an inner side of the tire for the profile S2.

Thus, the volume of uneven wear at the widthwise outer portion 12 in the vicinity of the ground contact end most easily causing the uneven wear can be more decreased to maintain the good appearance.

In this case, it is preferable that as shown in FIG. 9, the width w10 of the fine-width circumferential groove 11 is gradually widened from the groove bottom toward the side of the tread surface.

Thus, even if foreign matter such as small stones or the like on the road surface are bitten into the fine-width circumferential groove 11, the foreign matter easily departs from the groove, whereby there can be prevented the occurrence of uneven wear nucleus in the widthwise inner portion 13 due to the running at a state of biting the foreign matter.

Further, the tread construction is preferable that at least a part of the zone having the plural holes 10 in the widthwise inner portion 13of the land part 2a at the axially inner side is contacted with ground under an action of a load corresponding to not less than 70% of a maximum load capacity of the tire.

In this case, even if the load is low and the ground contact width becomes narrow in a rear wheel of a front-wheel driving car (FF car) as compared with the front wheel, the zone provided with the plural holes 10 is contacted with ground, whereby the effect of suppressing the occurrence of uneven wear and the growth thereof can be guaranteed.

More preferably, the opening sizes R of the holes 10 is made large in the widthwise inner portion 13 of the land part 2a at the axially inner side as they are separated apart from the equatorial plane of the tire.

Thus, the effect of suppressing the occurrence of uneven wear and the growth thereof can be made large by the formation of the above plural holes 10 as the large bearing of lateral force or braking force approaches to the ground contact end. Also, when the holes 10 are arranged in a zone effective for the suppression of uneven wear and are not arranged in a portion other than this zone as far as possible, it is possible to well maintain the steering stability and the tread durability in the portion other than the above zone.

Preferably, a distance Q among mutually plural holes 10 in the widthwise inner portion 13 of the land part 2a at the axially inner side is made small as they are separated apart from the equatorial plane of the tire.

Even in this case, the effect of suppressing the uneven wear can be made large in the vicinity of the ground contact end, and it is possible to maintain good steering stability and tread durability by arranging the plural holes in only the zone effective for the suppression of uneven wear.

Further, it is preferable that the depth of the hole 10 is made deeper as the hole is separated apart from the equatorial plane of the tire. Even in this case, the effect of suppressing the uneven wear can be made large in the vicinity of the ground contact end, and it is possible to maintain good steering stability and tread durability by arranging the plural holes in only the zone effective for the suppression of uneven wear.

Then, there is explained a case that a technique of improving indoor silentness to the tire maintaining the high resistance to hydroplaning on the wet road surface and reducing the noise according to the above procedure in connection with a wheel to be mounted with the tire.

As a factor of obstructing the indoor silentness in the passenger car, there are mentioned a sound directly produced from the tire and a solid propagation sound produced by transmitting vibrations of the tire to the interior of the vehicle. Among them, the solid propagation sound is roughly divided into a road noise in which the tire is vibrated as a whole by subjecting to a forced input from the irregularity of the road surface and the vibrations are transmitted through a wheel axle to a vehicle body and then changed into a sound in an interior of the vehicle, and a pattern noise in which the tire is vibrated by a geometrical discontinuity of a tread pattern itself in the tire and the vibrations are transmitted through the wheel axle to the vehicle body and then changed into a sound in the interior of the vehicle.

Among these noises, the increase of the solid transmission sound has hitherto been considered due to the increase of elastic vibration of the tire. In order to decrease the elastic vibration, various countermeasures are attempted in the tire itself, but satisfactory results are not necessarily obtained.

For this end, the inventors have made various studies on the solid transmission sound, and obtained a knowledge that the vibration characteristics of the wheel is an important factor for increasing the solid transmission sound. Also, it becomes clear that the transmission of vibrations from the tire to the vehicle is carried out from the tire tread portion through the pair of sidewall portions, pair of bead portions, wheel rim and wheel disc to the wheel axle in this order and the vibration transmitting characteristics transmitted from each shoulder portion of the tire tread to the wheel axle differ and the form thereof does not result from an offset direction of the wheel disc with respect to the wheel rim but results from the size and shape of the wheel itself.

In the invention, therefore, means for improving the indoor silentness by conducting a reducing countermeasure of the solid transmission sound considering the vibration transmission characteristics every kind of the wheel is established as shown in the items (19) -(25).

This means is described in detail with reference to the drawings.

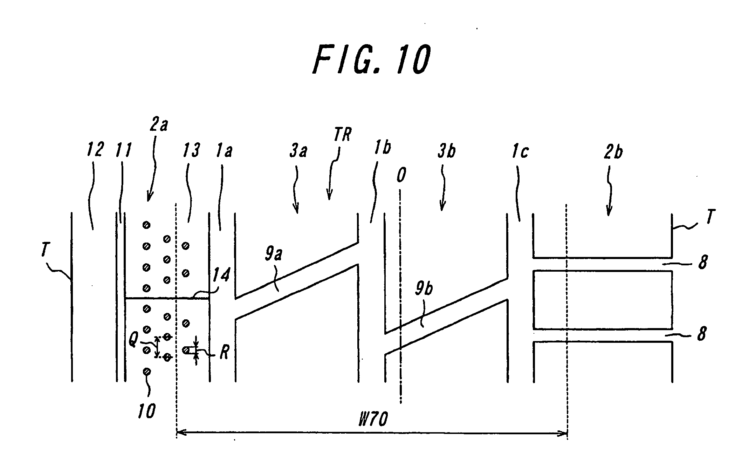

That is, FIG. 10 is a developed view of a tread pattern shown as a front view when the tire assembled on the wheel and inflated under an air pressure is mounted on the vehicle. The interior structure of the tire is the same as in the general radial tire and the illustration thereof is omitted here.

In a tread TR are arranged at least three circumferential grooves 1a, 1b and 1c continuously extending in the circumferential direction, and a total volume of lateral grooves, which may be formed in the land part 2a located at a side mounted on the wheel and having a large transmission ratio (lateral groove is not formed in the illustrated embodiment) as to the land parts 2a, 2b defined by the circumferential grooves 1a and 1c and a tread end T, per unit width in the widthwise direction of the tread over a full circumference of the tread is made smaller than a total volume of lateral grooves 8 formed in the land part 2b located at the side of the other tread end.

Moreover, slant grooves 9a, 9b are formed in two land parts 3a, 3b defined by the three circumferential grooves 1a, 1b and 1c, respectively, but it is not limited to such an illustrated embodiment.

Also, the land part 2a is provided with a fine-width circumferential groove 11 extending continuously and linearly in the circumferential direction of the tread, in which the land part 2a is divided into two portions through the fine-width circumferential groove 11 in the widthwise direction of the tread. In this case, an outer portion 12a from the fine-width circumferential groove 11 in the widthwise direction of the tread is rendered into a narrow-width rib, while an inner portion 13 from the fine-width circumferential groove 11 in the widthwise direction of the tread is provided with plural holes 10 separated apart from the circumferential groove 1a and the fine-width circumferential groove 11. Furthermore, sipes 14 may be formed in the widthwise inner portion 13 of the tread at equal intervals in the circumferential direction of the tread.

In this case, the total volume of the lateral grooves in the land part 2a is made smaller than the total volume of the lateral grooves 8 in the land part 2b, whereby the lateral grooves as a discontinuous component in the circumferential direction at the land part 2a having a large vibration transmission characteristic can be made less and the occurrence of pattern noise produced in the contacting of the lateral groove with ground can be prevented.

In this case, the term "lateral grooves, which may be formed in the land part 2a" includes a case that the lateral grooves are not formed as in the illustrated embodiment. In the latter case, the total volume of the lateral grooves is naturally zero.

By arranging the fine-width circumferential groove 11 and the plural holes 10 on the land part 2a is lowered the compression rigidity of the land part 2a, whereby the input from the irregularity of the road surface to the tire is decreased to suppress vibrations transmitted to the wheel axle and hence the road noise transmitted to the vehicle interior can be reduced. In this case, the fine-width circumferential groove 11 and the plural holes 10 do not form the discontinuous portion with respect to the circumferential direction of the tread different from the lateral groove, so that the occurrence of the pattern noise can be also suppressed.

On the other hand, by arranging lateral grooves 8 in the land part 2b can be ensured the groove volume as a whole of the tread pattern and hence the wet drainage performance can be ensured.

Furthermore, when sipes 14 are formed in the widthwise inner portion 13 of the tread in addition to the plural holes 10, the compression rigidity of the widthwise inner portion 13 of the tread can be further lowered, whereby the road noise can be further reduced.

Preferably, as seen from FIG. 9, the width w10 of the fine-width circumferential groove 11 is gradually widened from the groove bottom toward the side of the tread surface.

Thus, even if foreign matters such as small stones and the like are bitten in the fine-width circumferential groove 11, the foreign matter is easily taken out from the groove, whereby there can be prevented the occurrence of nucleus for uneven wear in the widthwise inner portion 13 of the tread due to the running at a state of biting the foreign matter.

More preferably, as shown in FIG. 10, an opening size R of each of the holes 10 formed in the widthwise inner portion 13 of the tread is made larger apart from the equatorial plane O of the tire, and a distance Q between mutual holes 10 is made smaller apart from the equatorial plane O of the tire, and a depth of the holes 10 is made deeper apart from the equatorial plane O of the tire.

Thus, the compression rigidity of the widthwise inner portion 13 of the tread provided with the plural holes 10 in the radial direction of the tire can be lowered toward the ground contact end at a side of a portion of the wheel mounted having a large transmission ratio. More effectively, the input from the irregularity of the road surface to the tire can be decreased to control vibrations transmitted to the wheel axle and reduce the road noise transmitted to the vehicle interior. Also, the holes are arranged in a zone effective for the reduction of the road noise but are not arranged in a portion of the tread other than the above zone as far as possible, whereby it is made possible to well keep the steering stability and tread durability in such a portion.

As shown in FIG. 10, it is preferable that at least a part of a zone including the plural holes 10 arranged in the widthwise inner portion 13 of the tread at a widthwise inside of a ground contact width W70 of the tread under an action of a load corresponding to not less than 70% of a maximum load capacity of the tire contacts with ground.

According to this construction, even if the load in the rear wheel becomes small as compared with the front wheel and the ground contact width of the tread becomes small as in the rear wheel during the braking of, for example, a front-wheel driving car (FF car), at least a part of the zone having the holes 10 arranged in the widthwise inner portion 13 of the tread can be surely contacted with ground to guarantee the effect of reducing the road noise.

More preferably, as shown in FIG. 9, at least one curvature center C1 among curvature centers of a curve constituting a profile S1 of a side face of the widthwise outer portion 12 is located at an outside of the profile S1 in a section in the widthwise direction of the tire, while a curvature center C2 of a curve constituting a profile S2 of the widthwise inner portion is located at an inside of the profile S2.

Thus, the volume of uneven wear in the widthwise outer portion 12 can be decreased to well maintain the appearance.

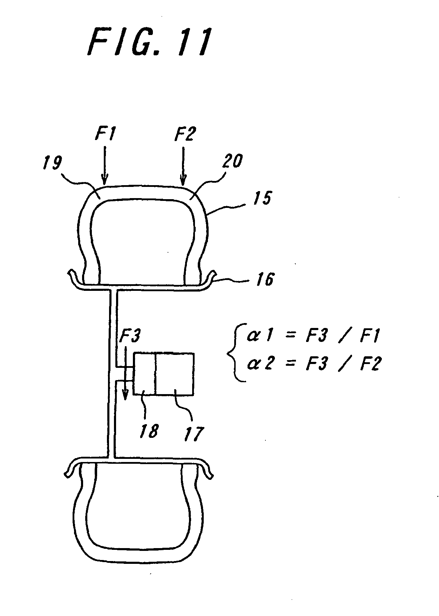

FIG. 11 is a view schematically illustrating a method of measuring vibration transmitting characteristics of a wheel according to the invention. By conducting such a measurement can be easily and surely specified a land part located at a side having a large transmission ratio in the mounting on the wheel.

A wheel 16 mounted with a tire 15 having a widthwise sectional shape symmetrical with respect to an equatorial plane of the tire is attached to an axle member 18 provided with a road cell 17, and vibrations are applied to each of shoulder portions 19, 20 of the tire tread at different frequencies, and an input F3 to the axle member is measured as these vibration forces are made as inputs F1 and F2, and then transmission ratios $\alpha 1$ and $\alpha 2$ by dividing F3 by F1, F2 are determined every each frequency and each of these transmission ratios $\alpha 1$, $\alpha 2$ is averaged to measure an average value of the transmission ratios $\alpha 1$, $\alpha 2$ to judge whether either average value of these transmission ratios is large.

Thus, a side having large vibration transmission characteristics in the wheel can be specified by accurately judging either of the shoulder portions 19, 20 of the tire tread at a given frequency zone is large in the contribution to the input to the axle member 18, and it is possible to effectively locate various countermeasures at tire side for suppressing solid propagation sound to the wheel.

More preferably, the given frequency zone is made 300-1000 Hz.

In this case, the side having a large transmission ratio to the wheel can be specified more accurately.

It is preferable that at a state that the aforementioned tire is assembled onto an approved rim and inflated under a normal air pressure and loaded under a mass corresponding to the maximum load capacity, the effective ground contact area at either axially inner side or axially outer side mounted on the vehicle is made larger than that of the other side, and also at a posture inflated under the normal air pressure, the radial distance from a tangential line on the outer surface of the tread perpendicular to the equatorial plane of the tire is made larger at the side having a small effective ground contact area than at the other side in view of the control of conicity force, which is easily caused in a tire having a asymmetrical pattern. In this case, it is more preferable that a relation between a ratio of large and small of the effective ground contact area (S-large/S-small) and a ratio of large and small of the radial distance (H-large/H-small) is (S-large/S-small) = A x (H-large/H-small) in which A is 1.0-1.4.

That is, in the cornering of the vehicle, it is widely conducted to enhance the cornering force by making a rigidity of a land part located at the axially outer side of the tread in the tire existing at the outside of the cornering, in which the load becomes large and the ground contact area increases, larger than that at the axially inner side. As a concrete construction, therefore, it is general that the negative ratio at the axially outer side is made small to enhance the rigidity of the land part, while the negative ratio at the axially inner side is made large to ensure the drainage property.

In case of adopting a so-called asymmetrical tread pattern having the above construction, however, since the ground contact area at the axially outer side is larger than that at the axially inner side, even if the vehicle is run straightforward, the widthwise shearing force  of the ground contact face of the tread from the road surface in the ground contact face of the tire is considerably different between the axially inner side and the axially outer side, and such a difference is a cause of generating the conicity force as in the application of camber angle to the tire, and hence lateral force directing toward a direction of the axially outer side is generated in the tire.

As a result of various examinations on such a conicity force, there is obtained a knowledge that the widthwise shearing force generated in the ground contact zone of the tread becomes largest in the tread shoulder portion and such a shearing force becomes larger as the distance of the ground contact zone of the tread separated from the equatorial plane of the tire becomes large and is vary sensitive to the separating distance.

In the asymmetrical tread pattern in which the effective ground contact area in either axially inner side or axially outer side is larger than that at the axially outer side, therefore, the radial distance from the outer surface of the tread perpendicular to the equatorial plane of the tire to each ground contact end is made larger at the side having a small effective ground contact area than at the other side, whereby the widthwise shearing force generated in the tread shoulder portion located at a side having a large radial distance is contributed to offset the conicity force generated at the side having a large effective ground contact area, and particularly the steering stability at a small steering angle is improved.

In this case, it is preferable that a relation between a ratio of large and small of the effective ground contact area (S-large/S-small) and a ratio of large and small of the radial distance (H-large/H-small) is made (S-large/S-small) = A x (H-large/H-small) in which A is 1.0-1.4 for more effectively offsetting the conicity force.

When A is less than 1.0, the conicity force in an opposite direction is easily generated, while when it exceeds 1.4, the effect of offsetting the conicity force becomes smaller.

The method of suppressing the conicity force is explained  concretely with reference to the drawing.

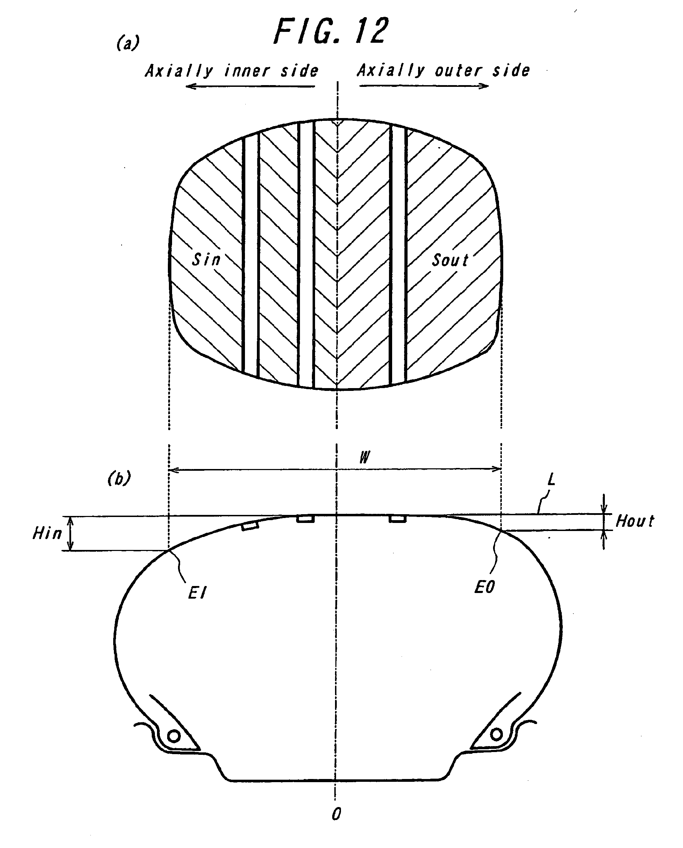

For example, as the ground contact face of the tread is schematically shown in FIG. 12(a) by making the negative ratios at the axially inner side and the axially outer side in the ground contact face of the tread different from each other, under a state that the tire is assembled on an approved rim and inflated under a normal air pressure and loaded under a mass corresponding to the maximum load capacity, when the effective ground contact area at the axially outer side $S_{out}$ shown by oblique lines in the figure is made larger than the effective ground contact area at the axially inner side $S_{in}$, in order to suppress the occurrence of conicity force directing to the direction of the axially outer side, it is effective that as schematically shown by a section in the widthwise direction of the tire at a state of inflating under the normal air pressure in FIG. 12(b), the tire is constructed, for example, by selecting a shape of an inner surface of a vulcanization mold or the like so that radial distances $H_{in}$, $H_{out}$ from a tangential line L on the outer surface of the tire perpendicular to the equatorial plane O of the tire to ground contact edges of the tread EI, EO is made larger at the axially inner side having a small effective ground contact area ($H_{in} > H_{out}$).

In this case, it is more preferable that when the large effective ground contact area is S-large, the small effective ground contact area is S-small, the radial distance at the side having a large effective ground contact area is H(S-large side) and the radial distance at the side having a small effective ground contact area is H(S-small side), the following relationship is satisfied:

$$\text{S-large} / \text{S-small} = A \times \left( H_{(\text{S-small side})} / H_{(\text{S-large side})} \right)$$

in which A is 1.0-1.4.

BRIEF DESCRIPTION OF THE DRAWINGS

FIG. 1 is a view showing a difference in drainage capacity based on a ground contact form;
FIG. 2 is a view showing a distribution of a sensitivity on a columnar resonance sound in a widthwise direction of a tread;
FIG. 3 is a view showing a tread pattern according to the invention;
FIG. 4 is a view illustrating a mounting manner of a tire according to the invention;
FIG. 5 is a view showing a tread pattern according to the invention;
FIG. 6 is a view showing a structure of a fine groove;
FIG. 7 is a view showing another tread pattern according to the invention;
FIG. 8 is a developed view of a tread pattern showing an embodiment of the invention by a front view of the tire at a posture of mounting on a vehicle;
FIG. 9 is a widthwise sectional view showing a part of the tread pattern according to the invention;
FIG. 10 is a developed view of a tread pattern showing an embodiment of the invention by a front view of a posture when the tire mounted on a wheel and inflated under an air pressure is mounted on a vehicle;
FIG. 11 is a view schematically showing a method of measuring vibration transmission characteristics of a wheel according to the invention;
FIG. 12 is a view showing a construction of a tire for suppressing conicity force;
FIG. 13 is a view showing various tread patterns used in examples;
FIG. 14 is a view showing various tread patterns used in examples;
FIG. 15 is a view showing various tread patterns used in examples;
FIG. 16 is a view showing a tread pattern for comparison;
FIG. 17 is a developed view of a tread pattern showing the other embodiment of the invention by a front view of the tire at a posture of mounting on a vehicle;
FIG. 18 is a developed view of a tread pattern showing an embodiment of the comparative tire by a front view of the tire at a posture of mounting on a vehicle;
FIG. 19 is a developed view of a tread pattern showing another embodiment of the comparative tire by a front view of the tire at a posture of mounting on a vehicle;
FIG. 20 is a developed view of a tread pattern showing the other embodiment of the comparative tire by a front view of the tire at a posture of mounting on a vehicle;
FIG. 21 is a developed view of a tread pattern showing a further embodiment of the comparative tire by a front view of the tire at a posture of mounting on a vehicle;
FIG. 22 is a developed view of a tread pattern showing a still further embodiment of the comparative tire by a front view of the tire at a posture of mounting on a vehicle;
FIG. 23 is a developed view of a tread pattern showing an embodiment of the comparative tire by a front view of a posture when the tire mounted on a wheel and inflated under an air pressure is mounted on a vehicle;
FIG. 24 is a developed view of a tread pattern showing another embodiment of the comparative tire by a front view of a posture when the tire mounted on a wheel and inflated under an air pressure is mounted on a vehicle;

FIG. 25 is a view schematically showing a sectional form of a wheel; and

FIG. 26 is a developed view of a tread pattern in Comparative Example 12.

BEST MODE FOR CARRYING OUT THE INVENTION

(Example 1)

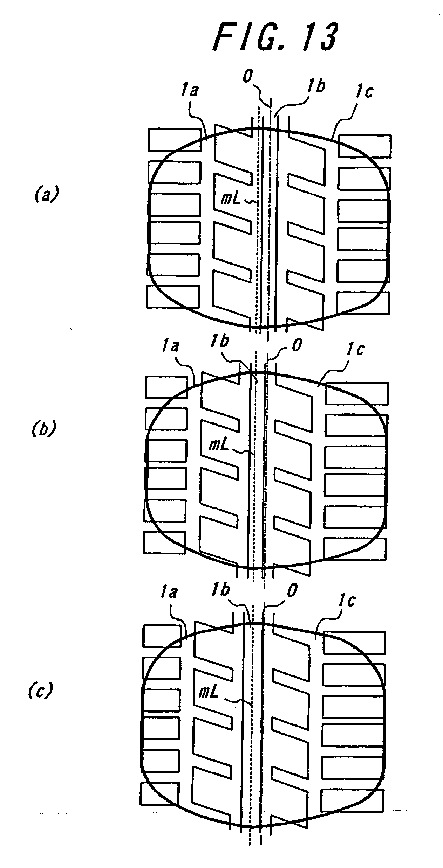

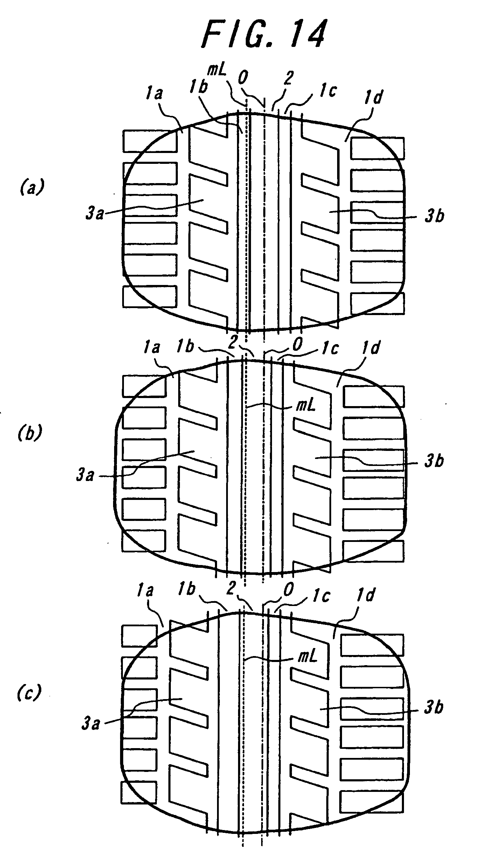

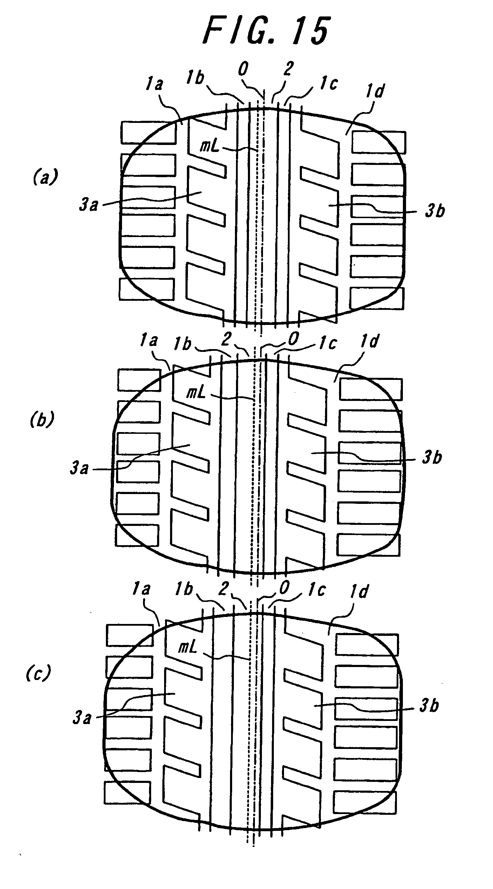

Radial tires having tread patterns shown in FIGS. 13-15 and tire sizes of 205/65 R15 in FIG. 13, 205/55 R16 in FIG. 14 and 225/55 R16 in FIG. 15 are prepared according to the following various specifications. Moreover, constructions other than circumferential  groove(s), i.e. land parts defined between mutual circumferential grooves and between circumferential groove and tread end and lateral grooves and slant grooves arranged in the land parts and extending across an equatorial plane of the tire are the same as a basic specification. Also, a ground contact form shown by a heavy line in each figure is a case that a camber angle is applied to a front wheel of the vehicle.

Example 1-1

(A) Conventional Example 1-1: FIG. 13(a)

There are three circumferential grooves 1a-1c, in which the circumferential groove 1b is arranged on the equatorial plane O of the tire and the circumferential grooves 1a, 1c are arranged at positions each separated apart from both sides thereof at an equal distance. All of these circumferential grooves have a rectangular section of 8 mm in groove width and 8 mm in depth.

(B) Conventional Example 1-2: FIG. 13(b)

When Conventional Example 1-2 is compared with Conventional Example 1-1, all of the circumferential grooves are located at a position shifting by 5 mm toward an axially inner side. The groove width and depth are the same as in Conventional Example 1-1.

(C) Invention Example 1-1: FIG. 13(c)

Invention Example 1-1 has a rectangular section in which a center position of each circumferential groove is the same as in Conventional Example 1-2, but the groove width is circumferential groove 1a: 8.0 mm, circumferential groove 1b: 9.6 mm and circumferential groove 1c: 6.4 mm from the axially inner side and the groove depth is 8 mm.

(D) Invention Example 1-2: FIG. 13(c)

Invention Example 1-2 has a rectangular section in which a center position of each circumferential groove is the same as in Conventional Example 1-2, but the groove width is circumferential groove 1a: 8.8 mm, circumferential groove 1b: 9.6 mm and circumferential groove 1c: 5.6 mm from the axially inner side and the groove depth is 8 mm.

(E) Invention Example 1-3: FIG. 13(c)

Invention Example 1-3 has a rectangular section in which a center position of each circumferential groove is the same as in Conventional Example 1-2, but the groove width is circumferential groove 1a: 7.2 mm, circumferential groove 1b: 9.6 mm and circumferential groove 1c: 7.2 mm from the axially inner side and the groove depth is 8 mm.

(F) Comparative Example 1-1: FIG. 13(c)

Comparative Example 1-1 has a rectangular section in which a center position of each circumferential groove is the same as in Conventional Example 1-2, but the groove width is circumferential groove 1a: 8.0 mm, circumferential groove 1b: 8.8 mm and circumferential groove 1c: 7.2 mm from the axially inner side and the groove depth is 8 mm.

(G) Comparative Example 1-2: FIG. 13(c)

Comparative Example 1-2 has a rectangular section in which a center position of each circumferential groove is the same as in Conventional Example 1-2, but the groove width is circumferential groove 1a: 9.2 mm, circumferential groove 1b: 9.6 mm and circumferential groove 1c: 5.2 mm from the axially inner side and the groove depth is 8 mm.

(H) Comparative Example 1-3: FIG. 13(c)

Comparative Example 1-3 has a rectangular section in which a center position of each circumferential groove is the same as in Conventional Example 1-2, but the groove width is circumferential groove 1a: 6.8 mm, circumferential groove 1b: 9.6 mm and circumferential groove 1c: 7.6 mm from the axially inner side and the groove depth is 8 mm.

(I) Invention Example 1-4: FIG. 13(c)

Invention Example 1-4 ha a rectangular section in which a center position of each circumferential groove is the same as in Conventional Example 1-2, but the groove width is circumferential groove 1a: 7.2 mm, circumferential groove 1b: 11.6 mm and circumferential groove 1c: 5.2 mm from the axially inner side and the groove depth is 8 mm.

(J) Comparative Example 1-4: FIG. 13(c)

Comparative Example 1-4 has a rectangular section in which a center position of each circumferential groove is the same as in Conventional Example 1-2, but the groove width is circumferential groove 1a: 7.2 mm, circumferential groove 1b: 12.0 mm and circumferential groove 1c: 4.8 mm from the axially inner side and the groove depth is 8 mm.

Moreover, an average groove width in the tread pattern of FIG. 13 is 8 mm.

Each of the above tires is assembled on a rim of 6J-15 and mounted on a passenger car after an internal pressure is adjusted to 220 kPa. At a state of riding two crewmen, a camber to ground is -0.4° in a front wheel and -0.8° in a rear wheel. An acceleration test of the vehicle from a speed of 50 km/h in a pool having a water depth of 6 mm is carried out to evaluate a speed of causing the hydroplaning by a test driver. The evaluation results are represented by an index of hydroplaning speed, in which the larger the index value, the better the result.

Also, a braking test is carried out on a wet road surface having a water depth of 2 mm from a speed of 100 km/h to evaluate the hydroplaning in the braking. The evaluation result is represented by an index, in which the larger the index value, the better the result. Further, a noise is measured around a driver's ear in the running at a speed of 60 km/h on a smooth road surface, in which the larger the index value, the better the result.

These evaluation results are shown in Table 1.

Table 1

| | Index of hydroplaning speed | Index of hydroplaning in braking | Index of noise |
|---|---|---|---|
| Conventional Example 1-1 | 100 | 100 | 100 |
| Conventional Example 1-2 | 95 | 102 | 102 |
| Invention Example 1-1 | 105 | 105 | 105 |
| Invention Example 1-2 | 102 | 108 | 108 |
| Invention Example 1-3 | 108 | 103 | 102 |
| Comparative Example 1-1 | 97 | 103 | 103 |
| Comparative Example 1-2 | 99 | 108 | 102 |
| Comparative Example 1-3 | 103 | 98 | 98 |
| Invention Example 1-4 | 102 | 102 | 103 |
| Comparative Example 1-4 | 99 | 99 | 102 |

As shown in Table 1, it can not be denied that Comparative Example 1-1 is lacking in the resistance to hydroplaning though the width of the center circumferential groove is +10% of the average groove width. In Comparative Example 1-2, the resistance to hydroplaning in the braking is good as compared with Invention Example 1-2 because the circumferential groove at the axially inner side is 115% of the average groove width, but the index of hydroplaning speed is deteriorated because the width of the circumferential groove at the axially outer side becomes too small. In Comparative Example 1-3, the width of the circumferential groove at the axially outer side is -5% of the average groove width, and such a wide groove width at the axially outer side is disadvantageous in the noise, while the width of the circumferential groove at the axially inner side is narrow and the resistance to hydroplaning in the braking is poor. In Comparative Example 1-4, the circumferential groove at the axially inner side is +50% of the average groove width, and hence the groove at the axially outer side is too narrow and the resistance to hydroplaning is deteriorated.

Example 1-2

(A) Conventional Example 1-3: FIG. 14(a)

There are four circumferential grooves 1a-1d, in which circumferential grooves 1b and 1c are arranged at both sides of a rib 2 disposed at its width center on the equatorial plane O of the tire and having a width of 20 mm, and circumferential grooves 1a and 1d are arranged at outsides of land parts 3a, 3b disposed at the outside of the groove and having a width of 20 mm. All of these circumferential grooves have a rectangular section of 8 mm in groove width and 8 mm in depth.

(B) Conve nt io nal Example 1-4: FIG. 14(b)

When Con ventional Example 1-4 is compared with Conventional Example 1-3, all of the circumferential grooves are located at a position shifting by 6 mm toward an axially inner side. The circumferential groove 1b is existent at a position of a maximum ground contact length w hen the tire is mounted on a vehicle at a negative camber of -0.5°. The groove width and depth are the same as in Conventional Example 1-3.

(C) Invention Example 1-5: FIG. 14(c)

Invention Example 1-5 has a rectangular section in which a center position of each circumferential groove is the same as in Conventional Example 1 -4, but the groove width is circumferential groove 1a: 8.0 mm, circumferential groove 1b: 9.6 mm, circumferential groove 1c: 7.2 mm and circumferential groove 1d: 7.2 mm from the axially inner side and the groove depth is 8 mm.

(D) Invention Example 1-6: FIG. 14(c)

Invention Example 1-6 has a rectangular section in which a center position of each circumferential groove is the same as in Conventional Examp le 1-4, but the groove width is circumferential groove 1a: 8.8 mm, circumferential groove 1b: 9.6 mm, circumferential groove 1c: 6.8 mm and circumferential groove 1d: 6.8 mm from the axially inner side and the groove depth is 8 mm.

(E) Comparative Example 1-5: FIG. 14(c)

Comparative Example 1-5 has a rectangular section in which a center position of each circumferential groove is the same as in Conventional Example 1-4, but the groove width is circumferential groove 1a: 8.8 mm, circumferential groove 1b: 8.8 mm, circumferential groove 1c: 7.2 mm and circumferential groove 1d: 7.2 mm from the axially inner side and the groove depth is 8 mm.

(F) Comparative Example 1-6: FIG. 14(c)

Comparative Example 1-6 has a rectangular section in which a center position of each circumferential groove is the same as in Conventional Example 1-4, but the groove width is circumferential groove 1a: 9.2 mm, circumferential groove 1b: 9.6 mm, circumferential groove 1c: 6.6 mm and circumferential groove 1d: 6.6 mm from the axially inner side and the groove depth is 8 mm.

(G) Comparative Example 1-7: FIG. 14(c)

Comparative Example 1-7 has a rectangular section in which a center position of each circumferential groove is the same as in Conventional Example 1-4, but the groove width is circumferential groove 1a: 7.2 mm, circumferential groove 1b: 9.6 mm, circumferential groove 1c: 7.6 mm and circumferential groove 1d: 7.6 mm from the axially inner side and the groove depth is 8 mm.

Moreover, the average groove width in the tread pattern of FIG. 14 is 8 mm.

Each of the above tires is assembled on a rim of 6.5J-16 and mounted on a passenger car after an internal pressure is adjusted to 220 kPa. At a state of riding two crewmen, a camber to ground is -0.5° in a front wheel and -0.8° in a rear wheel. An acceleration test of the vehicle from a speed of 50 km/h in a pool having a water depth of 6 mm is carried out to evaluate a speed of causing the hydroplaning by a test driver. The evaluation results are represented by an index of hydroplaning speed, in which the larger the index value, the better the result.

Also, a braking test is carried out on a wet road surface having a water depth of 2 mm from a speed of 100 km/h to evaluate the hydroplaning in the braking. The evaluation result is represented by an index, in which the larger the index value, the better the result. Further, a noise is measured around a driver's ear in the running at a speed of 60 km/h on a smooth road surface, in which the larger the index value, the better the result.

These evaluation results are shown in Table 2.

Table 2

|  | Index of hydroplaning speed | Index of hydroplaning in braking | Index of noise |
| --- | --- | --- | --- |
| Conventional Example 1-3 | 100 | 100 | 100 |
| Conventional Example 1-4 | 102 | 102 | 102 |
| Invention Example 1-5 | 108 | 106 | 106 |
| Invention Example 1-6 | 110 | 108 | 108 |
| Comparative Example 1-5 | 101 | 103 | 107 |
| Comparative Example 1-6 | 100 | 109 | 102 |
| Comparative Example 1-7 | 103 | 98 | 97 |

As shown in Table 2, Comparative Example 1-5 is lacking in the resistance to hydroplaning as compared with Conventional Example 1-4 though the width of the center circumferential groove is +10% of the average groove width. In Comparative Example 1-6, the resistance to hydroplaning in the braking is good as compared with Invention Example 1-6 because the circumferential groove at the axially inner side is 115% of the average groove width, but the index of hydroplaning speed is deteriorated because the width of the circumferential groove at the axially outer side becomes too small. In Comparative Example 1-7, the width of the circumferential groove at the axially outer side is -5% of the average groove width, and such a wide groove width at the axially outer side is disadvantageous in the noise, while the width of the circumferential groove at the axially inner side is narrow and the resistance to hydroplaning in the braking is poor.

Example 1-3

(A) Conventional Example 1-5: FIG. 15(a)

There are four circumferential grooves 1a-1d, in which circumferential grooves 1b and 1c are arranged at both sides of a rib 2 disposed at its width center on the equatorial plane O of the tire and having a width of 20 mm, and circumferential grooves 1a and 1d are arranged at outsides of land parts 3a, 3b disposed at the outside of the groove and having a width of 20 mm. All of these circumferential grooves have a rectangular section of 8 mm in groove width and 8 mm in depth.

(B) Conventional Example 1-6: FIG. 15(b)

When Conventional Example 1-6 is compared with Conventional Example 1-5, all of the circumferential grooves are located at a position shifting by 6 mm toward an axially inner side. The circumferential groove 1b is existent at a position of a maximum ground contact length when the tire is mounted on a vehicle at a negative camber of -0.5°. The groove width and depth are the same as in Conventional Example 1-5.

(C) Invention Example 1-7: FIG. 15(c)

Invention Example 1-7 has a rectangular section in which a center position of each circumferential groove is the same as in Conventional Example 1-6, but the groove width is circumferential groove 1a: 8.0 mm, circumferential groove 1b: 10.4 mm, circumferential groove 1c: 6.8 mm and circumferential groove 1d: 6.8 mm from the axially inner side and the groove depth is 8 mm.

(D) Invention Example 1-8: FIG. 15(c)

Invention Example 1-8 has a rectangular section in which a center position of each circumferential groove is the same as in Conventional Example 1-6, but the groove width is circumferential groove 1a: 8.0 mm, circumferential groove 1b: 12.4 mm, circumferential groove 1c: 5.8 mm and circumferential groove 1d: 5.8 mm from the axially inner side and the groove depth is 8 mm.

(E) Comparative Example 1-8: FIG. 15(c)

Comparative Example 1-8 has a rectangular section in which a center position of each circumferential groove is the same as in Conventional Example 1-6, but the groove width is circumferential groove 1a: 8.8 mm, circumferential groove 1b: 13.2 mm, circumferential groove 1c: 5.4 mm and circumferential groove 1d: 5.4 mm from the axially inner side and the groove depth is 8 mm.

Moreover, the average groove width in the tread pattern of FIG. 15 is 8 mm.

Each of the above tires is assembled on a rim of 7.5J-16 and mounted on a passenger car after an internal pressure is adjusted to 210 kPa. At a state of riding two crewmen, a camber to ground is -0.3° in a front wheel and -0.5° in a rear wheel. An acceleration test of the vehicle from a speed of 50 km/h in a pool having a water depth of 6 mm is carried out to evaluate a speed of causing the hydroplaning by a test driver. The evaluation results are represented by an index of hydroplaning speed, in which the larger the index value, the better the result.

Also, a braking test is carried out on a wet road surface having a water depth of 2 mm from a speed of 100 km/h to evaluate the hydroplaning in the braking. The evaluation result is represented by an index, in which the larger the index value, the better the result. Further, a noise is measured around a driver's ear in the running at a speed of 60 km/h on a smooth road surface, in which the larger the index value, the better the result.

These evaluation results are shown in Table 3.

Table 3

| | Index of hydroplaning speed | Index of hydroplaning in braking | Index of noise |
|---|---|---|---|
| Conventional Example 1-5 | 100 | 100 | 100 |
| Conventional Example 1-6 | 100 | 102 | 102 |
| Invention Example 1-7 | 108 | 106 | 106 |
| Invention Example 1-8 | 102 | 103 | 107 |
| Comparative Example 1-8 | 98 | 99 | 108 |

As shown in Table 3, Comparative Example 1-8 is lacking in the resistance to hydroplaning as compared with Conventional Example 1-6 though the width of the center circumferential groove is +65% of the average groove width but the width of the circumferential groove at the axially outer side becomes too small.

(Example 2)

Example 2-1

There is prepared a radial tire for passenger car having a tread pattern shown in FIG. 5 and a tire size of 205/65R15. In the tread pattern shown in FIG. 5, the depth of all of four circumferential groove is 8 mm, and the width is 8 mm in the circumferential grooves 1a and 1d, 9.6 mm in the circumferential groove 1b at a side of increasing the ground contact length by the application of a negative camber angle (corresponding to an axially inner side) and 6.4 mm in the circumferential groove 1c at a side of decreasing the ground contact length (corresponding to an axially outer side). Also, an offset amount of a land part center S with respect to the equatorial plane O of the tire is 5 mm, and the ground contact form shown by a heavy line is a case of applying a negative camber angle of 0.5°.

Further, fine grooves 6 are inclined at 15° with respect to a widthwise direction of the tire. As shown in FIG. 6, the fine groove 6 is cut into a rib-shaped land part 4 having a width of 18 mm over a full width thereof at a depth of 10 mm in a radial direction of the tire and at an inclination angle of ±22.5° with respect to the radial direction of the tire. Also, an opening width of the fine groove 6 is 0.4 mm, and a distance between mutual fine grooves 6 is 30 mm.

Example 2-1

There is prepared a radial tire for passenger car having a tread pattern shown in FIG. 7 and a tire size of 205/65R15. The tread pattern shown in FIG. 7 is the same as in FIG. 5 except that dimples 7 each having a major axis inclined at 15° with respect to the widthwise direction of the tire are arranged in the rib-shaped land part 4 instead of the fine groove 6. Moreover, the dimple 7 has a major axis of  13 mm and minor axis of 3 mm, and a distance between mutual dimples 7 is 30 mm.

Comparative Example 2-1

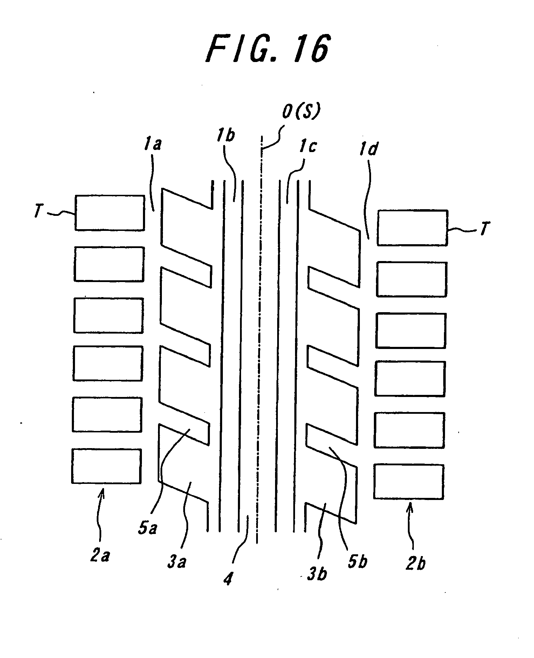

FIG. 16 is a tread pattern for the comparison, and a basic pattern thereof is the same as in Invention Example 2-1, but is different in points that the fine groove 6 is not arranged in the rib-shaped land part 4 and that the widthwise center of the rib-shaped land part 4 is located on the equatorial plane O of the tire. Moreover, the depth of the circumferential grooves is 8 mm, and the width is 8 mm in the circumferential grooves 1a and 1d, and 7 mm in the circumferential grooves 1b and 1c.

Each of the above tires is assembled onto a standard rim and an internal pressure thereof is adjusted to 220 kPa, and thereafter the resistance to hydroplaning and steering stability are evaluated by feeling in the straight running on a test circuit course, while the worn amount of a tread central portion is evaluated by running the vehicle over 20000 km as regards a center wear. The results are shown in Table 4 by an index on the basis that Comparative Example 2-1 is 100, in which the larger the index value, the better the result.

Table 4

|  | Steering stability | Resistance to hydroplaning | Center wear |
|---|---|---|---|
| Invention Example 2-1 | 105 | 108 | 102 |
| Invention Example 2-2 | 102 | 108 | 101 |
| Comparative Example 2-1 | 100 | 100 | 100 |

(Example 3)

For the purpose of evaluating the performance of suppressing uneven wear in a pneumatic tire according to an embodiment of the invention, there are provided two kinds of invention tires and five kinds of comparative tires each having a tire size of 205/65 R15. Each of these tires is assembled on a rim of 6Jx15 as a designation and inflated under an air pressure of 220 kPa and mounted on a test vehicle and run over 30000 km, and thereafter the wearing of the tread portion  at an axially inner side is measured to evaluate the performance of suppressing the uneven wear. The results are shown in Table 5.

In a tread pattern of Invention Example 3-1, as shown in FIG. 8, at least two circumferential grooves, three circumferential grooves 1a, 1b, 1c in the illustrated embodiment (width 1a: 8.0 mm, 1b: 9.6 mm and 1c: 6.4 mm) extending continuously in a circumferential direction are arranged in a tread TR, and as to land parts. 2a, 2b defined by these circumferential grooves 1a, 1c and tread ends T, the land part 2a located at an axially inner side is shaped in a rib and the land part 2b located at an axially outer side is provided with lateral grooves 8 to form a land part row of blocks, and a total volume of lateral grooves between both the land parts is made small in the land part 2a to make a rigidity of land part in the circumferential direction larger in the land part 2a than in the land part 2b. Also, lateral grooves 9a and 9b are arranged in the other two land parts 3a and 3b defined among the three circumferential grooves, respectively. Furthermore, the land part 2a is provided with a plurality of holes 10 separated apart from the circumferential groove 1a, whereby a volume of concave portion in a zone ranging from a center line Ci of the land part 2a to a side of the tread end T is made larger than a volume of concave portion in a zone ranging from the center line Ci toward a side opposite to the tread end. In addition, the land part 2a located at the axially inner side in the mounting on the vehicle is divided by a fine-width circumferential groove 11 into a widthwise outer portion 12 and a widthwise inner portion 13, and a width (10 mm) of the widthwise outer portion 12 is made narrower than a width (20 mm) of the widthwise inner portion 13 and is not more than 1/10 of a tread width.

In the fine-width circumferential groove 11, a depth is 5.0 mm, and a width at groove bottom is 1.5 mm and a width at the tread surface is 2.6 mm. Also, a width of the widthwise outer portion 12 is 2 mm, and a width of the widthwise inner portion 13 is 18 mm.

In the land part 12a at the axially inner side are arranged a plurality of holes 10 separated apart from the circumferential groove 1a and the fine-width circumferential groove 11. These holes 10 consists of two hole rows, in which widthwise outer holes have a diameter of 2.5 mm, a depth of 6 mm and a distance between centers of 7.5 mm, and the widthwise inner holes have a diameter of 1.5 mm, a depth of 6 mm and a distance between centers of 7.5 mm.

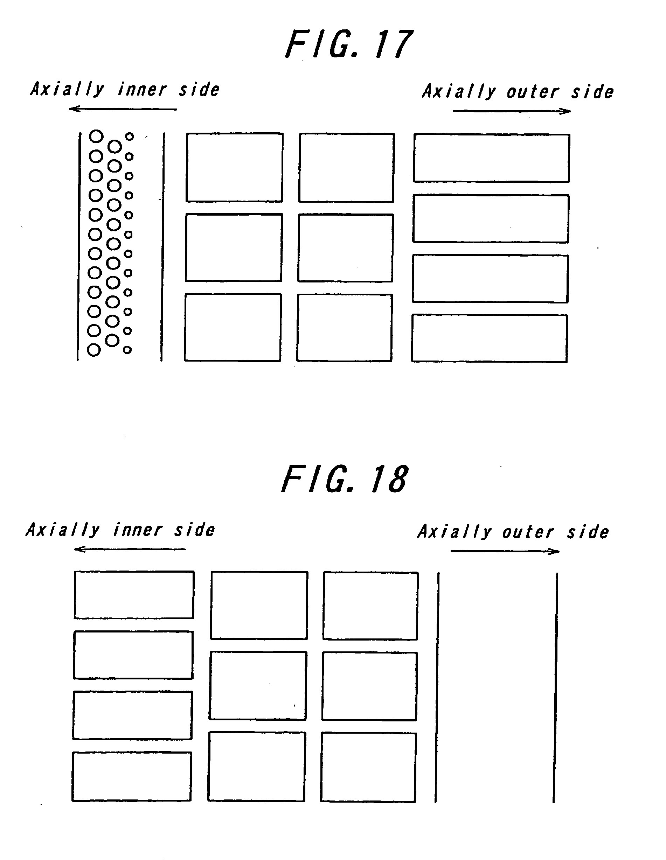

A tread pattern of Invention Example 3-2 is standardized on Invention Example 3-1 as shown in FIG. 17, in which a hole row having a diameter of 2.5 mm, a depth of 6 mm and a distance between centers of 7.5 mm is arranged without forming the fine-width circumferential groove.

In a tread pattern of Comparative Example 3-1, as shown in FIG. 18, lateral grooves are not arranged on a land part located in a side of the tread end at the axially outer side, and lateral grooves are arranged on a land part located in a side of the tread end at the axially inner side.

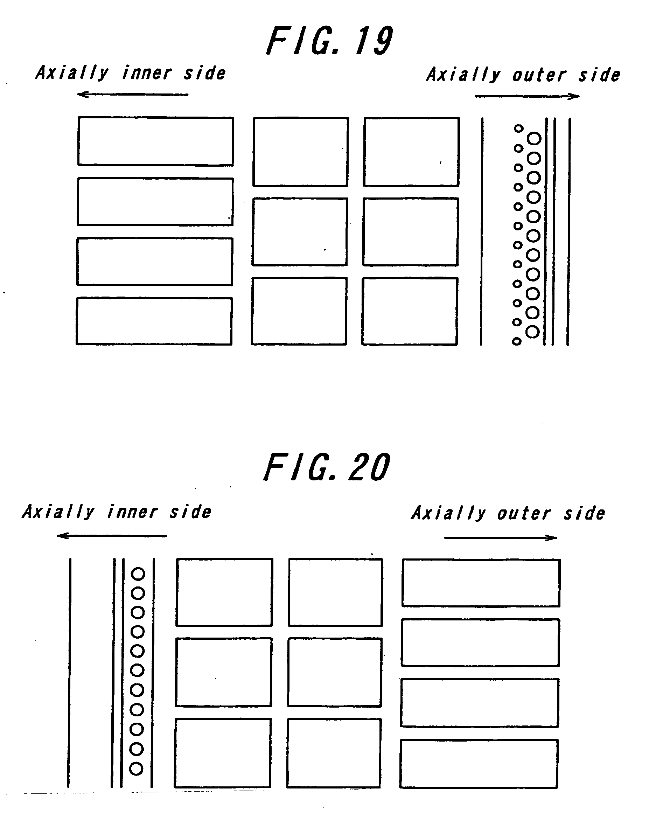

In a tread pattern of Comparative Example 3-2, as shown in FIG. 19, the tread pattern shown in Invention Example 3-1 is opposite between the axially outer side and the axially inner side.

A tread pattern of Comparative Example 3-3 is standardized on Invention Example 3-1 as shown in FIG. 20, in which the width of the widthwise outer portion 12 is 14 mm and the width of the widthwise inner portion 13 is 6 mm, and a hole row having a diameter of 2.5 mm, a depth of 6 mm and a distance between centers of 7.5 mm is arranged in the widthwise inner portion 13.

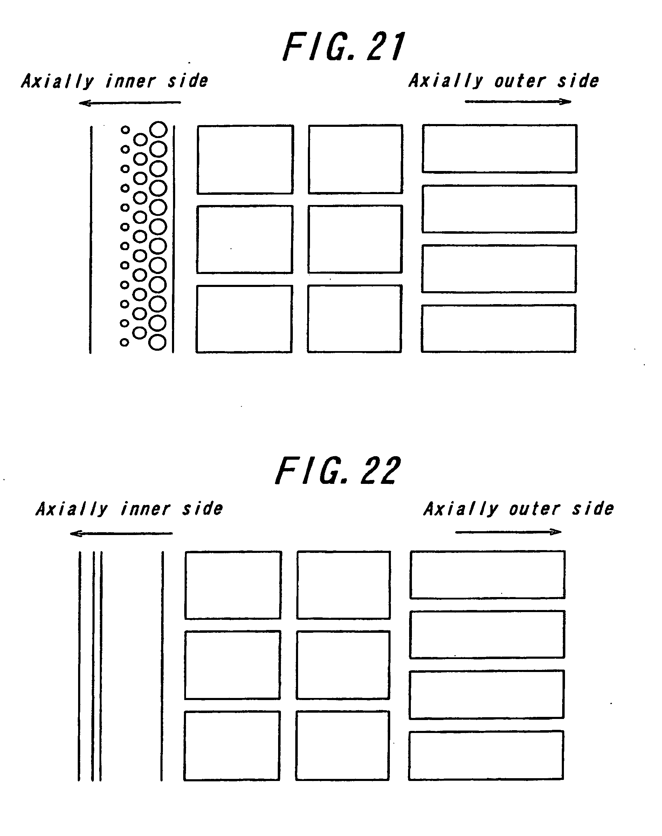

A tread pattern of Comparative Example 3-4 is standardized on Invention Example 3-1 as shown in FIG. 21, in which the fine-width circumferential groove is not arranged, and a hole row having a diameter of 3.0 mm, a depth of 6 mm and a distance between centers of 7.5 mm, and a hole row having a diameter of 2.0 mm, a depth of 6 mm and a distance between centers of 7.5 mm, and a hole row having a diameter of 1.0 mm, a depth of 6 mm and a distance between centers of 7.5 mm are arranged from a widthwise inner side in this order.

A tread pattern of Comparative Example 3-5 is standardized on Invention Example 3-1 as shown in FIG. 22, in which the holes are not formed.

The performance is evaluated by measuring a difference between worn amount of the land part at the axially inner side and worn amount of the land part at the axially outer side and represented by an index on the basis that the measured result of Comparative Example 3-1 is 100, in which the smaller the index value, the better the result.

Table 5

|  | Index of evaluation of resistance to uneven wear |
|---|---|
| Invention Example 3-1 | 72 |
| Invention Example 3-2 | 85 |
| Comparative Example 3-1 | 100 |
| Comparative Example 3-2 | 120 |
| Comparative Example 3-3 | 95 |
| Comparative Example 3-4 | 90 |
| Comparative Example 3-5 | 92 |

In Table 5, when Invention Example 3-1 is compared with Comparative Example 3-1, it is understood that Invention Example 3-1 can largely prevent the uneven wear of the land part at the axially inner side as compared with Comparative Example 3-1.

When Comparative Example 3-2 is compared with Comparative Example 3-1, it is understood that if the lateral groove component in the land part at the axially outer side is made small and this land part is divided by the fine-width circumferential groove into the widthwise inner portion and the widthwise outer portion and the holes are formed in these portions, lateral force in the cornering can not be born and hence the performance of suppressing the uneven wear is rather deteriorated. In this case, the outer portion located at the outside of the fine-width circumferential groove does not function against the lateral force and hence the uneven wear is caused in the inner portion and the appearance is deteriorated.

When Invention Example 3-1 is compared with Comparative Example 3-5, it is understood that the uneven wear can be further suppressed by arranging the holes in the widthwise inner portion of the land part.

When Invention Example 3-2- is compared with Invention Example 3-1, it is understood that the uneven wear can be further suppressed by dividing the land part at the axially inner side through the fine-width circumferential groove into the widthwise outer portion and the widthwise inner portion.

When Comparative Example 3-3 is compared with Invention Example 3-1, it is understood that when the width of the widthwise outer portion is too large, the effect of suppressing the uneven wear is small.

When Invention Example 3-2 is compared with Comparative Example 3-4, it is understood that the arrangement of the holes, in which the diameter of the hole at the widthwise outside, is made large is effective for suppressing the uneven wear.

(Example 4)

Example 4-1

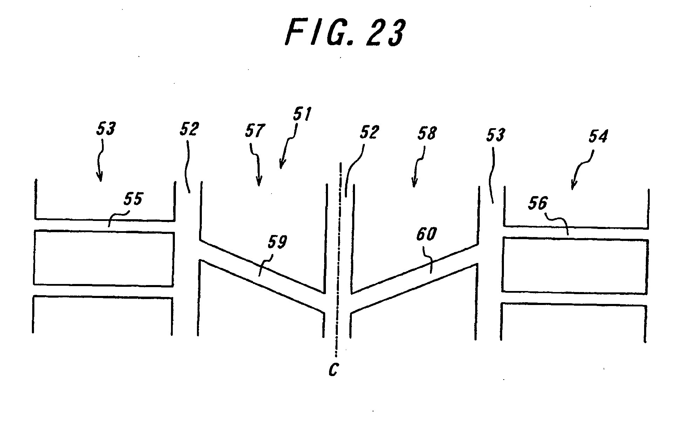

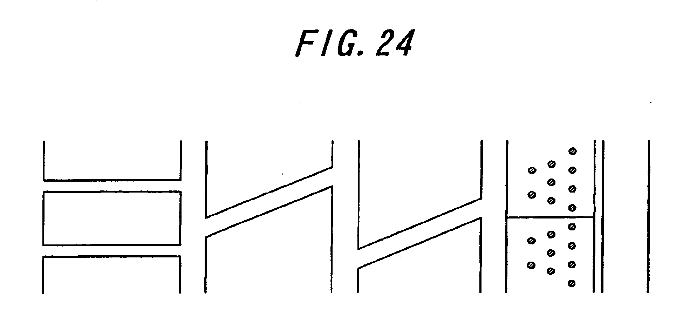

For the purpose of measuring the effect of reducing interior noise in the pneumatic tire according to the invention, there are provided one kind of a tire having a tire size of 205/65R15 and a tread pattern shown in FIG. 10 (Invention Example 4-1) and two kinds of tires having tread patterns shown in FIGS. 23 and 24 (Comparative Examples 4-1 and 4-2). Each of these tires is inflated under an air pressure of 200 kPa and assembled onto an aluminum wheel having a size of 14x6JJ (transmission ratio: +3 dB at an overall (total sound pressure level)), in which the transmission ratio is larger in a rear side (axially inner side) than in a front side (axially outer side), and mounted on a domestic FF car of 2000 cc. A running test on a rough road surface is carried out at 60 km/h, during which noise level at a zone value of 300-800 Hz is measured at a position corresponding to a left ear of a driver. Moreover, the widths of the circumferential grooves in all of the tires are 8.0 mm, 9.6 mm and 7.4 mm from a left side of the figure in this order.

The results are shown in Table 6.

In Comparative Example 4-1, as shown in FIG. 23, at least two circumferential grooves, particularly three circumferential grooves 52 in the figure continuously extending in a circumferential direction are arranged in a tread 51, and lateral grooves 55, 56 are arranged in a land part 53 of a widthwise end side located at a side having a large vibration transmission characteristic of a wheel to be mounted and a land part 54 of the other widthwise end side among land parts defined by these circumferential grooves 52 so as to be made total volumes equal to each other, and slant grooves 59, 60 are arranged in two land parts 57, 58 defined inward in the widthwise direction by the three circumferential grooves 52, respectively.

In Comparative Example 4-2, as shown in FIG. 24, the tire of Invention Example 4-1 is mounted on a wheel so as to turn the direction of the pattern inside out.

Table 6

|  | Interior noise |
|---|---|
| Invention Example 4-1 | $\Delta$ 1.5 dB |
| Comparative Example 4-1 | standard value |
| Comparative Example 4-2 | + 0.4 dB |

In Table 6, when Invention Example 4-1 is compared with Comparative Examples 4-1 and 4-2, it is understood that by mounting the tire of Invention Example 4-1 on a wheel so as to position a land part having a small total volume of lateral grooves and provided with fine-width circumferential groove and holes to a side having a large transmission ratio of wheel is lowered compression rigidity of such a land part to reduce the road noise and also the geometrical discontinuity of the land part is lessened to reduce the pattern noise, whereby a solid propagation sound can be reduced to reduce the interior noise.

Comparative Example 4-2 is a case that the tire of Invention Example 4-1 is mounted on the wheel so as to position the land part having a small total volume of lateral grooves and provided with fine-circumferential groove and holes to a side having a small transmission ratio of wheel, from which it is understood that the number of lateral grooves in the land part arranged at a side having a large transmission ratio of wheel becomes large and the geometrical discontinuity increases and hence the pattern noise increases and the interior noise is rather deteriorated as compared with Comparative Example 4-1.

Example 4-2

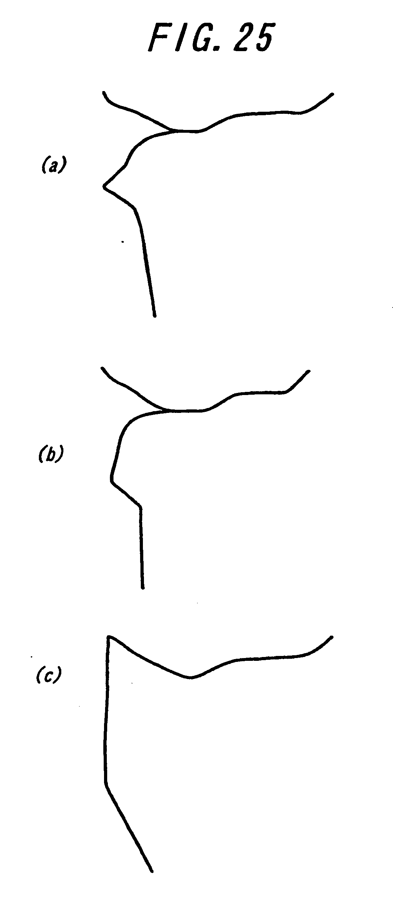

For the purpose of specifying a side having a large transmission ratio in various wheels, there are provided three kinds of wheels A, B, C having a sectional shape shown in FIG. 25 and an offset value of a disc of 45 mm with respect to a rim having a size of 14x6JJ and provided with a tire having a widthwise sectional shape symmetric with respect to an equatorial plane of the tire. Each of these wheels is mounted on an axle portion provided with a load cell, and vibrations are applied to both shoulder portions of a tread of the tire by a vibration exciter to measure a vibration force as an input and a force measured at the axle portion as an output, and a function of transmission ratio responding to frequency is determined at each of front side and back side to determine a ratio of transmission ratio (back/front) every each frequency and calculate an average thereof at a frequency zone of 300-1000 Hz, from which a side having a large transmission characteristic of wheel is specified. The results are shown in Table 7. When a numerical value is 1, the transmission ratios at the front and back sides are the same, and when it exceeds 1, the transmission ratio at the back side is large, and when it is less than 1, the transmission ratio at the front side is large.

Table 7

|  | Transmission ratio (back/front) |
| --- | --- |
| Wheel A | 1.0 |
| Wheel B | 0.8 |
| Wheel C | 2.95 |

According to the above, the side having a large transmission ratio of wheel can be accurately specified, and it is possible to effectively apply various countermeasures for suppressing the solid propagation sound.

(Example 5)

With respect to a tire-wheel assembly using an invention tire and comparative tires of 205/65 R15 in size, the conicity force is measured and the steering stability and resistance to hydroplaning are determined to obtain results as shown in Table 8.

Invention Example 5-1 has a shape of a ground contact face of a tread shown in FIG. 12(a), in which three circumferential grooves having a depth of 8 mm (groove width is 8.0 mm, 9.6 mm and 7.4 mm from a left side of the figure in this order) are asymmetrically arranged at axially inner and outer sides, and a ratio of effective ground contact area at axially outer side $S_{out}$ to ground contact area at axially inner side Sin with respect to the equatorial plane O of the tire is 1.14, and a radial distance from a tangential line L on an outer surface of the tread at a position corresponding to 80% of a tread width W is 5.8 mm at the axially outer side and 6.2 mm at the axially inner side.

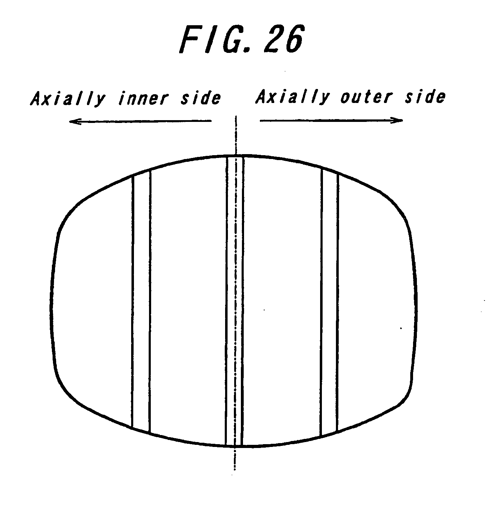

Comparative Example 5-1 has a shape of a ground contact face of a tread shown in FIG. 26, in which three circumferential grooves having a depth of 8 mm are arranged symmetrically with respect to the equatorial plane of the tire, and the effective ground contact areas at the front and back sides are equal to each other, and the radial distance from the tangential line L on an outer surface of the tread at a position corresponding to 80% of a tread width W is substantially equal at the front and back sides.

Comparative Example 5-2 has a shape of a ground contact face of a tread shown in FIG. 12(a), in which the radial distance from the tangential line L on an outer surface of the tread at a position corresponding to 80% of a tread width W is substantially equal at the front and back sides.

The steering stability is evaluated by feeling in the running on a test circuit course, and the resistance to hydroplaning is evaluated by feeling in the straight running on a road surface having a water depth of 6 mm. Moreover, the larger the index value, the better the result.

The conicity force is determined by averaging found values of 10 tires.

Table 8

|  | Steering stability | Resistance to hydroplaning | Conicity force |
| --- | --- | --- | --- |
| Invention Example 5-1 | 105 | 108 | 20 |
| Comparative Example 5-1 | 100 | 100 | 18 |
| Comparative Example 5-2 | 108 | 108 | 86 |

As seen from Table 8, Invention Example 5-1 develops high steering stability and resistance to hydroplaning and can control the conicity force to the same level as in the symmetrical pattern tire of Comparative Example 5-1.

INDUSTRIAL APPLICABILITY

According to the invention, there can be provided tires in which the resistance to hydroplaning and the controllability of tire noise, which have been a conflicting relation in the prior art, are established in a higher level.

**Claims**

1. A tire having an asymmetric tread pattern which designates directions to inner and outer sides of a vehicle when the tire is mounted on the vehicle, wherein at least two circumferential grooves (1a, 1b) extending along an equatorial plane (O) of the tire are formed in a region of a tread surface at an axially inner side (Sin) with respect to the equatorial plane (O) in the mounting on the vehicle and at least one circumferential groove (1c) is formed in a region at an axially outer side (Sout) thereof, and a circumferential groove (1b) nearest to the equatorial plane (O) of the tire among the circumferential grooves arranged in the axially inner side region (Sin) has a width wider by 20% or more than an average groove width of the tire and a circumferential groove arranged toward a side of a tread end (T) at the axially inner side region (Sin) has a width corresponding to 90-110% of the average groove width, and the circumferential groove (1c) nearest to the equatorial plane (O) of the tire at the axially outer side region (Sout) has a width narrower by 10% or more than the average groove width,
wherein a rib-like land part (4) extending along the equatorial plane (O) of the tire is arranged on or in the vicinity of the equator of the tire sandwiched between the circumferential grooves, and the rib-like land part (4) has a center (5) in the widthwise direction of the tire positioned from the equatorial plane (O) of the tire toward a side of elongating a circumferential length of a ground contact area of the tread when a negative camber is applied to the tire and is provided with plural fine grooves (6) extending in a direction crossing with the equatorial plane (O) of the tire, and the fine groove (6) has a portion extending in a direction inclined with respect to a radial direction of the tread in the tire, and further a circumferential groove located at the side of elongating the circumferential length of the ground contact area of the tread among the two circumferential grooves sandwiching the rib-like land part (4) has a wide-width.

2. A tire having an asymmetric tread pattern according to claim 1, wherein one circumferential groove is arranged in the axially outer side region (Sout) and the circumferential groove arranged in the axially inner side region (Sin) and nearest to the equatorial plane (O) of the tire has a width corresponding to 120-145% of the average groove width.

3. A tire having an asymmetric tread pattern according to claim 1, wherein two circumferential grooves (1c,1d) are arranged in the axially outer side region (Sout) and the circumferential groove (1b) arranged in the axially inner side region (Sin) and nearest to the equatorial plane of the tire has a width corresponding to 130-160% of the average groove width.

4. A tire having an asymmetric tread pattern according to claim 1, wherein the fine groove (6) has an inclination angle of 5-55° with respect to the widthwise direction of the tire.

5. A tire having an asymmetric tread pattern according to claim 1 or 4, wherein the fine groove (6) is opened at the surface of the tread.

6. A tire having an asymmetric tread pattern according to claim 1, 4 or 5, wherein an opening width of the fine groove (6) is not more than 2 mm.

7. A tire having an asymmetric tread pattern according to claim 1 or 4, wherein the fine groove (6) is closed at the surface of the tread.

8. A tire having an asymmetric tread pattern according to any one of claims 1 to 3, wherein a rib-like land part (4) extending along the equatorial plane (O) of the tire is arranged on or in the vicinity of the equator of the tire sandwiched between the circumferential grooves, and the rib-like land part (4) has a center (5) in the widthwise direction of the tire positioned from the equatorial plane (O) of the tire toward a side of elongating a circumferential length of a ground contact area of the tread when a negative camber is applied to the tire and is provided with plural ellipsoidal recessed dimples (7) having a major axis in a direction crossing with the equatorial plane (O) of the tire, and further a circumferential groove located at the side of elongating the circumferential length of the ground contact area of the tread among the two circumferential grooves sandwiching the rib-like land part (4) has a wide-width.

9. A tire having an asymmetric tread pattern according to claim 8, wherein the major axis of the dimple (7) has an inclination angle of 5-45° with respect to the widthwise direction of the tire.

10. A tire having an asymmetric tread pattern according to any one of claims 1 to 3, wherein a total volume of lateral grooves (8), which may be formed in a land part (2a) at the axially inner side (Sin) in the mounting on the vehicle among the land parts defined between the circumferential groove and the tread end (T), per a unit width in the widthwise direction of the tread over a full circumference of the tread is made smaller than a similar total volume in the land part (2a) at the axially outer side (Sout) in the mounting on the vehicle.

11. A tire having an asymmetric tread pattern according to claim 10, wherein plural holes (10) separated from the circumferential groove and having a maximum depth corresponding to not less than 1/3 of a depth of the circumferential groove are formed in the land part (2a) at the axially inner side (Sin) in the mounting on the vehicle, and a volume of concave portion in a zone ranging from a line (Ci) passing through a center of such a land part (2a) in the widthwise direction of the tread to the side of tread end (T) is made larger than a volume of concave portion in a zone ranging from the line passing through the center in the widthwise direction toward a side opposite to the tread end (T).

12. A tire having an asymmetric tread pattern according to claim 10 or 11, wherein the land part at the axially inner side (Sin) in the mounting on the vehicle is divided by a fine-width circumferential groove (11) into a widthwise outer portion (12) and a widthwise inner portion (13), and a width (W) of the widthwise outer portion is made narrower than the widthwise inner portion and is not more than 1/10 of a tread width (W).

13. A tire having an asymmetric tread pattern according to claim 12, wherein at least one (C1) of curvature centers of curves constituting a profile (S1) of a side face of the widthwise outer portion in the tread at a section in the widthwise direction of the tire is positioned at an outer side (Sout) of the tire, and a curvature center (C2) of a curve constituting a profile (S2) of the widthwise inner portion is positioned at an inner side of the tire.

14. A tire having an asymmetric tread pattern according to any one of claims 10 to 13, wherein a width (w10) of the fine-width circumferential groove (11) is gradually widened from a groove bottom toward a side of the surface of the tread.

15. A tire having an asymmetric tread pattern according to any one of claims 10 to 14, wherein at least a part of a zone having plural holes (10) in the land part (2a) at the axially inner side mounted on the vehicle is contacted with ground under an action of a load corresponding to not less than 70% of a maximum load capacity of the tire.

16. A tire having an asymmetric tread pattern any one of claims 10 to 15, wherein an opening size (R) of the hole (10) in the land part (2a) at the axially inner side mounted on the vehicle is made large toward a direction separating away from the equatorial plane (O) of the tire.

17. A tire having an asymmetric tread pattern according to any one of claims 10 to 16, wherein a distance (Q) among the plural holes (10) in the land part (2a) at the axially inner side mounted on the vehicle is made smaller toward a direction separating away from the equatorial plane (O) of the tire.

18. A tire having an asymmetric tread pattern according to any one of claims 10 to 17, wherein a depth of the hole (10) in the land part (2a) at the axially inner side mounted on the vehicle is made deeper toward a direction separating away from the equatorial plane (O) of the tire.

19. A tire having an asymmetric tread pattern according to any one of claims 1 to 3, wherein when the tire is mounted on a wheel in which a transmission ratio of a radial force input to one end portion of a rim in the widthwise direction toward an axle is larger than the similar transmission ratio of a force input to the other end portion of the rim in the widthwise direction, a total volume of lateral grooves, which may be formed in a land part located at a side of large transmission ratio mounted on the wheel among the land parts defined between the circumferential groove and the tread end (T), per unit width in the widthwise direction of the tread over a full circumference of the tread is made smaller than the similar total volume of lateral grooves formed in the land part located at the side of the other tread end (T), and the land part located at a side of large transmission ratio is divided by a fine-width circumferential groove (11) into widthwise outer portion (12) and a widthwise inner portion (13), and a plurality of holes (10) separated from the circumferential groove and the lateral grooves are formed in the widthwise inner portion (13).

20. A tire having an asymmetric tread pattern according to claim 19, wherein a width of the fine-width circumferential groove (11) is gradually widened from a groove bottom toward a side of a surface of the tread.

21. A tire having an asymmetric tread pattern according to claim 19 or 20, wherein an opening size of each of the plural holes (10) formed in the widthwise inner portion (13) is made larger toward a direction separating away from the equatorial plane (O) of the tire.

22. A tire having an asymmetric tread pattern according to any one of claims 19 to 21, wherein a distance among the mutually plural holes (10) formed in the widthwise inner portion (13) is made smaller toward a direction separating away from the equatorial plane (O) of the tire.

23. A tire having an asymmetric tread pattern according to any one of claims 19 to 22, wherein a depth of each of the plural holes (10) formed in the widthwise inner portion (13) is made deeper toward a direction separating away from the equatorial plane (O) of the tire.

24. A tire having an asymmetric tread pattern according to any one of claims 19 to 23, wherein at least a part of a zone having plural holes (10) in the widthwise inner portion (13) is contacted with ground under an action of a load corresponding to not less than 70% of a maximum load capacity of the tire.

25. A tire having an asymmetric tread attern according to any one of claims 19 to 24, wherein at least one ($C_2$) of curvature centers ($C_1,C_2$) of curves constituting a profile $S_2$ of a side face of the widthwise outer portion (13) in the tread at a section in the widthwise direction of the tire is positioned at an outer side (Sout) of the tire, and a curvature center ($C_1$) of a curve constituting a profile ($S_1$) of the widthwise inner portion (12) is positioned at an inner side (Sin) of the tire.

26. A tire having an asymmetric tread pattern according to any one of claims 1 to 3, wherein an effective ground contact area of either axially inner side (Sin) or axially outer side (Sout) at a state that the tire is assembled on an approved rim and filled with a normal air pressure and loaded under a mass corresponding to a maximum load capacity is made larger than that of the other side, and a radial distance from a tangential line on an outer surface of the tread perpendicular to the equatorial plane (O) of the tire to each of tread ground contact edges at a posture of filling the normal air pressure is made larger in the side having a small effective ground contact area than in the other side.

27. A tire having an asymmetric tread pattern according to claim 26, wherein a relation between a ratio of large and small of the effective ground contact area (S-large/S-small) and a ratio of large and small of the radial distance (H-large/H-small) is (S-large/S-small) = A x (H-large/H-small) in which A is 1.0-1.4.

28. A method of mounting a tire having an asymmetric tread pattern on a vehicles through a suspension giving a negative camber at full time or as needed, which comprises taking a tire as claimed in any one of claims 1 to 27 in a use form that a circumferential groove formed in an axially inner side region (Sin) with respect to an equatorial plane (O) of the tire in the mounting on a vehicle and nearest to the equatorial plane (O) overlaps with such a position that a circumferential length of a tread ground contact region becomes maximum when a negative camber is applied to the tire.

**Patentansprüche**

1. Reifen mit einem asymmetrischem Laufflächenprofil, das die Richtungen zur inneren und äußeren Seite eines Fahrzeuges kennzeichnet, wenn der Reifen auf das Fahrzeug montiert wird, wobei mindestens zwei Umfangsrillen (1a, 1b), die sich längs einer Äquatorebene (O) des Reifens erstrecken, in einem Bereich einer Lauffläche auf einer axial inneren Seite (Sin) mit Bezugnahme auf die Äquatorebene (O) beim Montieren auf das Fahrzeug ausgebildet sind, und wobei mindestens eine Umfangsrille (1c) in einem Bereich auf einer axial äußeren Seiten (Sout) davon ausgebildet ist, und wobei eine Umfangsrille (1b), die der Äquatorebene (O) des Reifens am nächsten ist, unter den im axial inneren Seitenbereich (Sin) angeordneten Umfangsrillen eine Breite aufweist, die um 20 % oder mehr breiter ist als eine mittlere Rillenbreite des Reifens, und wobei eine Umfangsrille, die in Richtung zu einer Seite eines Laufflächenendes (T) im axial inneren Seitenbereich (Sin) angeordnet ist, eine Breite aufweist, die 90 bis 110 % der mittleren Rillenbreite entspricht, und wobei die Umfangsrille (1c), die der Äquatorebene (O) des Reifens im axial äußeren Seitenbereich (Sout) am nächsten ist, eine Breite aufweist, die um 10 % oder mehr schmaler ist als die mittlere Rillenbreite, wobei ein rippenartiges Stegteil (4), das sich längs der Äquatorebene (O) des Reifens erstreckt, am oder in der Nähe des Äquators des Reifens angeordnet ist, schichtartig zwischen den Umfangsrillen, und wobei das rippenartige Stegteil (4) eine Mitte (S) in der Breitenrichtung des Reifens aufweist, positioniert von der Äquatorebene (O) des Reifens in Richtung einer Seite der Längenzunahme einer Umfangslänge einer Reifenaufstandsfläche der Lauffläche, wenn ein negativer Radsturz beim Reifen angewandt wird, und mit mehreren feinen Rillen (6) versehen ist, die sich in einer Richtung erstrecken, die die Äquatorebene (O) des Reifens kreuzt, und wobei die feine Rille (6) einen Abschnitt aufweist, der sich in einer Richtung erstreckt, die mit Bezugnahme auf eine radiale Richtung der Lauffläche des Reifens geneigt ist, und wobei außerdem eine Umfangsrille, die auf der Seite der Längenzunahme der Umfangslänge der Reifenaufstandsfläche der Lauffläche unter den zwei Umfangsrillen angeordnet ist, zwischen denen das rippenartige Stegteil (4) schichtartig angeordnet ist, eine große Breite aufweist.

2. Reifen mit einem asymmetrischem Laufflächenprofil nach Anspruch 1, bei dem eine Umfangsrille im axial äußeren Seitenbereich (Sout) angeordnet ist, und bei dem die im axial inneren Seitenbereich (Sin) und am nächsten zur Äquatorebene (O) des Reifens angeordnete Umfangsrille eine Breite aufweist, die 120 bis 145 % der mittleren Rillenbreite entspricht.

3. Reifen mit einem asymmetrischem Laufflächenprofil nach Anspruch 1, bei dem zwei Umfangsrillen (1c, 1d) im axial äußeren Seitenbereich (Sout) angeordnet sind, und wobei die Umfangsrille (1b), die im axial inneren Seitenbereich (Sin) und am nächsten zur Äquatorebene des Reifens angeordnet ist, eine Breite aufweist, die 130 bis 160 % der mittleren Rillenbreite entspricht.

4. Reifen mit einem asymmetrischem Laufflächenprofil nach Anspruch 1, bei dem die feine Rille (6) einen Neigungswinkel von 5 bis 55° mit Bezugnahme auf die Breitenrichtung des Reifens aufweist.

5. Reifen mit einem asymmetrischem Laufflächenprofil nach Anspruch 1 oder 4, bei dem die feine Rille (6) auf der Oberfläche der Lauffläche offen ist.

6. Reifen mit einem asymmetrischem Laufflächenprofil nach Anspruch 1, 4 oder 5, bei dem die Öffnungsbreite der feinen Rille (6) nicht mehr als 2 mm beträgt.

7. Reifen mit einem asymmetrischem Laufflächenprofil nach Anspruch 1oder 4, bei dem die feine Rille (6) auf der Oberfläche der Lauffläche geschlossen ist.

8. Reifen mit einem asymmetrischem Laufflächenprofil nach einem der Ansprüche 1 bis 3, bei dem ein rippenartiges Stegteil (4), das sich längs der Äquatorebene (O) des Reifens erstreckt, am oder in der Nähe des Äquators des Reifens angeordnet ist, schichtartig zwischen den Umfangsrillen, und wobei das rippenartige Stegteil (4) eine Mitte (S) in der Breitenrichtung des Reifens aufweist, positioniert von der Äquatorebene (O) des Reifens in Richtung einer Seite der Längenzunahme einer Umfangslänge einer Reifenaufstandsfläche der Lauffläche, wenn ein negativer Radsturz beim Reifen angewandt wird, und mit mehreren elliptischen ausgesparten Vertiefungen (7) versehen ist, die eine Hauptachse in einer Richtung aufweisen, die die Äquatorebene (O) des Reifens kreuzt, und wobei außerdem eine Umfangsrille, die auf der Seite der Längenzunahme der Umfangslänge der Reifenaufstandsfläche der Lauffläche unter den zwei Umfangsrillen angeordnet ist, zwischen denen das rippenartige Stegteil (4) schichtartig angeordnet ist, eine große Breite aufweist.

9. Reifen mit einem asymmetrischem Laufflächenprofil nach Anspruch 8, bei dem die Hauptachse der Vertiefung (7) einen Neigungswinkel von 5 bis 45° mit Bezugnahme auf die Breitenrichtung des Reifens aufweist.

10. Reifen mit einem asymmetrischem Laufflächenprofil nach einem der Ansprüche 1 bis 3, bei dem ein Gesamtvolumen der seitlichen Rillen (8), die in einem Stegteil (2a) auf der axial inneren Seite (Sin) beim Montieren auf dem Fahrzeug zwischen den Stegteilen gebildet werden können, die zwischen der Umfangsrille und dem Laufflächenende (T) definiert werden, pro Einheitsbreite in der Breitenrichtung der Lauffläche über einen vollständigen Umfang der Lauffläche kleiner ausgeführt wird als ein gleiches Gesamtvolumen im Stegteil (2a) auf der axial äußeren Seite (Sout) beim Montieren auf dem Fahrzeug.

11. Reifen mit einem asymmetrischem Laufflächenprofil nach Anspruch 10, bei dem mehrere Löcher (10), die von der Umfangsrille getrennt sind und eine maximale Tiefe entsprechend nicht weniger als 1/3 einer Tiefe der Umfangsrille aufweisen, im Stegteil (2a) auf der axial inneren Seite (Sin) beim Montieren auf dem Fahrzeug gebildet werden, und wobei ein Volumen des konkaven Abschnittes in einer Zone, die sich von einer Linie (Ci), die durch eine Mitte eines derartigen Stegteils (2a) in der Breitenrichtung der Lauffläche passiert, bis zur Seite des Laufflächenendes (T) bewegt, größer ausgeführt wird als ein Volumen des konkaven Abschnittes in einer Zone, die sich von der Linie, die durch die Mitte in der Breitenrichtung passiert, in Richtung einer Seite entgegengesetzt dem Laufflächenende (T) bewegt.

12. Reifen mit einem asymmetrischem Laufflächenprofil nach Anspruch 10 oder 11, bei dem der Stegteil auf der axial inneren Seite (Sin) beim Montieren auf dem Fahrzeug durch eine Umfangsrille (11) mit feiner Breite in einen äußeren Abschnitt (12) in der Breitenrichtung und einen inneren Abschnitt (13) in der Breitenrichtung geteilt wird, und wobei eine Breite (W) des äußeren Abschnittes in der Breitenrichtung schmaler ausgeführt ist als der innere Abschnitt in der Breitenrichtung und nicht mehr als 1/10 einer Laufflächenbreite (W) beträgt.

13. Reifen mit einem asymmetrischem Laufflächenprofil nach Anspruch 12, bei dem mindestens einer (C1) der Krümmungsmittelpunkte der Kurven, die ein Profil (S 1) einer Seitenfläche des äußeren Abschnittes in der Breitenrichtung in der Lauffläche in einem Schnitt in der Breitenrichtung des Reifens bilden, auf einer äußeren Seite (Sout) des Reifens positioniert wird, und bei dem ein Krümmungsmittelpunkt (C2) einer Kurve, die ein Profil (S2) des inneren Abschnittes in der Breitenrichtung bildet, auf einer inneren Seite des Reifens positioniert wird.

14. Reifen mit einem asymmetrischem Laufflächenprofil nach einem der Ansprüche 10 bis 13, bei dem eine Breite (w10) der Umfangsrille (11) mit feiner Breite allmählich von einem Rillenboden in Richtung einer Seite der Oberfläche der Lauffläche verbreitert wird.

15. Reifen mit einem asymmetrischem Laufflächenprofil nach einem der Ansprüche 10 bis 14, bei dem mindestens ein Teil einer Zone mit mehreren Löchern (10) im Stegteil (2a) auf der axial inneren Seite, auf dem Fahrzeug montiert, mit dem Erdboden unter einer Wirkung einer Belastung in Kontakt gebracht wird, die nicht weniger als 70 % einer maximalen Belastbarkeit des Reifens entspricht.

16. Reifen mit einem asymmetrischem Laufflächenprofil nach einem der Ansprüche 10 bis 15, bei dem eine Öffnungsgröße (R) des Loches (10) im Stegteil (2a) auf der axial inneren Seite, auf dem Fahrzeug montiert, zu einer Richtung hin größer ausgeführt ist, die von der Äquatorebene (O) des Reifens weggeht.

17. Reifen mit einem asymmetrischem Laufflächenprofil nach einem der Ansprüche 10 bis 16, bei dem ein Abstand (Q) zwischen den mehreren Löchern (10) im Stegteil (2a) auf der axial inneren Seite, auf dem Fahrzeug montiert, zu einer Richtung hin kleiner ausgeführt ist, die von der Äquatorebene (O) des Reifens weggeht.

18. Reifen mit einem asymmetrischem Laufflächenprofil nach einem der Ansprüche 10 bis 17, bei dem eine Tiefe des Loches (10) im Stegteil (2a) auf der axial inneren Seite, auf dem Fahrzeug montiert, zu einer Richtung hin tiefer ausgeführt ist, die von der Äquatorebene (O) des Reifens weggeht.

19. Reifen mit einem asymmetrischem Laufflächenprofil nach einem der Ansprüche 1 bis 3, bei dem, wenn der Reifen auf einem Rad montiert ist, bei dem ein Übersetzungsverhältnis eines Radialkrafteinganges an einem Endabschnitt einer Felge in der Breitenrichtung zu einer Achse hin größer ist als das gleiche Übersetzungsverhältnis eines Krafteinganges am anderen Endabschnitt der Felge in der Breitenrichtung, ein Gesamtvolumen der seitlichen Rillen, die in einem auf der Seite des großen Übersetzungsverhältnisses angeordneten Stegteil, auf dem Rad montiert, zwischen den Stegteilen ausgebildet sein können, die zwischen der Umfangsrille und dem Laufflächenende (T) definiert werden, pro Einheitsbreite in der Breitenrichtung der Lauffläche über den gesamten Umfang der Lauffläche kleiner ausgebildet ist als das gleiche Gesamtvolumen der seitlichen Rillen, die in dem auf der Seite des anderen Laufflächenendes (T) angeordneten Stegteil ausgebildet sind, und wobei der auf der Seite des großen Übersetzungsverhältnisses angeordnet Stegteil durch eine Umfangsrille (11) mit feiner Breite in einen äußeren Abschnitt (12) in der Breitenrichtung und einen inneren Abschnitt (13) in der Breitenrichtung unterteilt wird, und wobei eine Vielzahl von Löchern (10), die von der Umfangsrille und den seitlichen Rillen getrennt sind, im inneren Abschnitt (13) in der Breitenrichtung ausgebildet sind.

20. Reifen mit einem asymmetrischem Laufflächenprofil nach Anspruch 19, bei dem eine Breite der Umfangsrille (11) mit feiner Breite allmählich von einem Rillenboden in Richtung einer Seite einer Oberfläche der Lauffläche verbreitert wird.

21. Reifen mit einem asymmetrischem Laufflächenprofil nach Anspruch 19 oder 20, bei dem eine Öffnungsgröße eines jeden der mehreren Löcher (10), die im inneren Abschnitt (13) in der Breitenrichtung ausgebildet sind, zu einer Richtung hin größer ausgeführt ist, die von der Äquatorebene (O) des Reifens weggeht.

22. Reifen mit einem asymmetrischem Laufflächenprofil nach einem der Ansprüche 19 bis 21, bei dem ein Abstand zwischen den gegenseitig mehreren Löcher (10), die im inneren Abschnitt (13) in der Breitenrichtung ausgebildet sind, zu einer Richtung hin kleiner ausgeführt ist, die von der Äquatorebene (O) des Reifens weggeht.

23. Reifen mit einem asymmetrischem Laufflächenprofil nach einem der Ansprüche 19 bis 22, bei dem eine Tiefe eines jeden der mehreren Löcher (10), die im inneren Abschnitt (13) in der Breitenrichtung ausgebildet sind, zu einer Richtung hin tiefer ausgeführt ist, die von der Äquatorebene (O) des Reifens weggeht.

24. Reifen mit einem asymmetrischem Laufflächenprofil nach einem der Ansprüche 19 bis 23, bei dem mindestens ein Teil einer Zone mit mehreren Löchern (10) im inneren Abschnitt (13) in der Breitenrichtung mit dem Erdboden unter einer Wirkung einer Belastung in Kontakt gebracht wird, die nicht weniger als 70 % einer maximalen Belastbarkeit des Reifens entspricht.

25. Reifen mit einem asymmetrischem Laufflächenprofil nach einem der Ansprüche 19 bis 24, bei dem mindestens einer (C2) der Krümmungsmittelpunkte (C1, C2) der Kurven, die ein Profil (S2) einer Seitenfläche des äußeren Abschnittes (13) in der Breitenrichtung in der Lauffläche in einem Schnitt in der Breitenrichtung des Reifens bilden, auf einer äußeren Seite (Sout) des Reifens positioniert wird, und bei dem ein Krümmungsmittelpunkt (C1) einer Kurve, die ein Profil (S 1) des inneren Abschnittes (12) in der Breitenrichtung bildet, auf einer inneren Seite des Reifens (Sin) positioniert wird.

26. Reifen mit einem asymmetrischem Laufflächenprofil nach einem der Ansprüche 1 bis 3, bei dem eine effektive Reifenaufstandsfläche von entweder der axial inneren Seite (Sin) oder der axial äußeren Seite (Sout) in einem Zustand, in dem der Reifen auf eine zugelassene Felge montiert und mit einem normalen Luftdruck gefüllt ist und unter einer Masse entsprechend einer maximalen Belastbarkeit belastet wird, größer ausgeführt wird als die der anderen Seite, und wobei ein radialer Abstand von einer tangentialen Linie auf einer äußeren oberen Fläche der Lauffläche senkrecht zur Äquatorebene (O) des Reifens zu einem jeden der Reifenaufstandsränder der Lauffläche in der Position des Füllens des normalen Luftdruckes in der Seite, die eine kleine effektive Reifenaufstandsfläche aufweist, größer als in der anderen Seite ausgeführt ist.

27. Reifen mit einem asymmetrischem Laufflächenprofil nach Anspruch 26, bei dem eine Beziehung zwischen einem Verhältnis von groß und klein bei der effektiven Reifenaufstandsfläche (S-groß/S-klein) und einem Verhältnis von groß und klein beim radialen Abstand (H-groß/H-klein) gleich (S-groß/S-klein) = A x (H-groß/H-klein) ist, worin A 1, 0 bis 1, 4 ist.

28. Verfahren zum Montieren eines Reifens mit einem asymmetrischem Laufflächenprofil auf ein Fahrzeug mittels einer Aufhängung, die einen negativen Radsturz über die gesamte Zeit liefert, oder, wenn es nötig ist, das den folgenden Schritt aufweist: Aufnehmen eines Reifens nach einem der Ansprüche 1 bis 27 in einer Gebrauchsform, dass sich eine Umfangsrille, die in einem axial inneren Seitenabschnitt (Sin) gebildet wird, mit Bezugnahme auf eine Äquatorebene (O) des Reifens beim Montieren auf ein Fahrzeug und der Äquatorebene (O) am nächsten mit einer derartigen Position überdeckt, dass eine Umfangslänge eines Reifenaufstandsbereiches der Lauffläche maximal wird, wenn ein negativer Radsturz beim Reifen zur Anwendung gebracht wird.

**Revendications**

1. Bandage pneumatique, comportant une sculpture de bande de roulement asymétrique, désignant les directions vers les côtés interne et externe d'un véhicule lorsque le bandage pneumatique est monté sur le véhicule, dans lequel au moins deux rainures circonférentielles (1a, 1b), s'étendant le long d'un plan équatorial (O) du bandage pneumatique, sont formées dans une région d'une surface de la bande de roulement, au niveau d'un côté axialement interne (Sin) par rapport au plan équatorial (O) lors du montage sur le véhicule, au moins une rainure circonférentielle (1c) étant formée dans une région au niveau d'un côté axialement externe (Sout), la rainure circonférentielle (1b) la plus proche du plan équatorial (O) du bandage pneumatique, parmi les rainures circonférentielles agencées dans la région du côté axialement interne (Sin), ayant une largeur supérieure de 20% ou plus à la largeur moyenne de rainure du bandage pneumatique, et une rainure circonférentielle agencée vers un côté de l'extrémité de la bande de roulement (T), au niveau de la région du côté axialement interne (Sin), ayant une largeur représentant 90 à 110% de la largeur moyenne de rainure, et la rainure circonférentielle (1c) la plus proche du plan équatorial (O) du bandage pneumatique, au niveau de la région du côté axialement externe (Sout), ayant une largeur inférieure de 10% ou plus à la largeur moyenne de rainure ;

dans lequel une partie d'appui en forme de nervure (4), s'étendant le long du plan équatorial (O) du bandage pneumatique, est agencée sur l'équateur du bandage pneumatique ou au voisinage de celui-ci, prise en sandwich entre les rainures circonférentielles, la partie d'appui en forme de nervure (4) comportant un centre (S) dans la direction de la largeur du bandage pneumatique, positionné du plan équatorial (O) du bandage pneumatique vers un côté d'allongement d'une longueur circonférentielle d'une surface de contact au sol de la bande de roulement, lors de l'application d'un carrossage négatif au bandage pneumatique, et comportant plusieurs fines rainures (6), s'étendant dans une direction croisant le plan équatorial (O) du bandage pneumatique, la fine rainure (6) comportant une partie s'étendant dans une direction inclinée par rapport à une direction radiale de la bande de roulement dans le bandage pneumatique, une rainure circonférentielle agencée au niveau du côté d'allongement de la longueur circonférentielle de la surface de contact au sol de la bande de roulement, parmi les deux rainures circonférentielles prenant en sandwich la partie d'appui en forme de nervure (4), ayant une grande largeur.

2. Bandage pneumatique, comportant une sculpture de bande de roulement asymétrique selon la revendication 1, dans lequel une rainure circonférentielle est agencée dans la région du côté axialement externe (Sou), la rainure circonférentielle agencée dans la région du côté axialement interne (Sin) et la plus proche du plan équatorial (O) du bandage pneumatique ayant une largeur représentant 120 à 145% de la largeur moyenne de rainure.

3. Bandage pneumatique, comportant une sculpture de bande de roulement asymétrique selon la revendication 1, dans lequel deux rainures circonférentielles (1c, 1d) sont agencées dans la région du côté axialement externe (Sout), la rainure circonférentielle (1b) agencée dans la région du côté axialement interne (Sin) et la plus proche du plan équatorial du bandage pneumatique ayant une largeur représentant 130 à 160% de la largeur moyenne de rainure.

4. Bandage pneumatique, comportant une sculpture de bande de roulement asymétrique selon la revendication 1, dans lequel la fine rainure (6) forme un angle d'inclinaison compris entre 5 et 55° par rapport à la direction de la largeur du bandage pneumatique.

5. Bandage pneumatique, comportant une sculpture de bande de roulement asymétrique selon les revendications 1 ou 4, dans lequel la fine rainure (6) est ouverte au niveau de la surface de la bande de roulement.

6. Bandage pneumatique, comportant une sculpture de bande de roulement asymétrique selon les revendications 1, 4 ou 5, dans lequel une largeur d'ouverture de la fine rainure (6) n'est pas supérieure à 2 mm.

7. Bandage pneumatique, comportant une sculpture de bande de roulement asymétrique selon les revendications 1 ou 4, dans lequel la fine rainure (6) est fermée au niveau de la surface de la bande de roulement.

8. Bandage pneumatique, comportant une sculpture de bande de roulement asymétrique selon l'une quelconque des revendications 1 à 3, dans lequel une partie d'appui en forme de nervure (4), s'étendant le long du plan équatorial (O) du bandage pneumatique, est agencée sur l'équateur du bandage pneumatique ou au voisinage de celui-ci, prise en sandwich entre les rainures circonférentielles, la partie d'appui en forme de nervure (4) comportant un centre (S) dans la direction de la largeur du bandage pneumatique, positionné du plan équatorial (O) du bandage pneumatique vers un côté d'allongement d'une longueur circonférentielle d'une surface de contact au sol de la bande de roulement, lors de l'application d'un carrossage négatif au bandage pneumatique, et comportant plusieurs fossettes ellipsoïdales évidées (7), comportant un axe majeur dans une direction croisant le plan équatorial (O) du bandage pneumatique, une rainure circonférentielle agencée au niveau du côté de l'allongement de la longueur circonférentielle de la surface de contact au sol de la bande de roulement, parmi les deux rainures circonférentielles prenant en sandwich la partie d'appui en forme de nervure (4), ayant en outre une grande largeur.

9. Bandage pneumatique, comportant une sculpture de bande de roulement asymétrique selon la revendication 8, dans lequel l'axe majeur de la fossette (7) forme un angle d'inclinaison compris entre 5 et 45° par rapport à la direction de la largeur du bandage pneumatique.

10. Bandage pneumatique, comportant une sculpture de bande de roulement asymétrique selon l'une quelconque des revendications 1 à 3, dans lequel un volume total des rainures latérales (8) pouvant être formées dans une partie d'appui (2a) au niveau du côté axialement interne (Sin) lors du montage sur le véhicule, parmi les parties d'appui définies entre la rainure circonférentielle et l'extrémité de la bande de roulement (T), par unité de largeur dans la direction de la largeur de la bande de roulement, sur l'ensemble de la circonférence de la bande de roulement, est inférieur à un volume total similaire dans la partie d'appui (2a) au niveau du côté axialement externe (Sout) lors du montage sur le véhicule.

**11.** Bandage pneumatique, comportant une sculpture de bande de roulement asymétrique selon la revendication 10, dans lequel plusieurs trous (10), séparés de la rainure circonférentielle et ayant une profondeur maximale ne représentant pas moins d'un tiers d'une profondeur de la rainure circonférentielle, sont formés dans la partie d'appui (2a) au niveau du côté axialement interne (Sin) lors du montage sur le véhicule, un volume d'une partie concave dans une zone s'étendant à partir d'une ligne (Ci) passant à travers un centre d'une telle partie d'appui (2a), dans la direction de la largeur de la bande de roulement, vers le côté de l'extrémité de la bande de roulement (T), étant supérieur à un volume d'une partie concave dans une zone s'étendant à partir de la ligne passant à travers le centre, dans la direction de la largeur, vers un côté opposé de l'extrémité de la bande de roulement (T).

**12.** Bandage pneumatique, comportant une sculpture de bande de roulement asymétrique selon les revendications 10 ou 11, dans lequel la partie d'appui au niveau d'un côté axialement interne (Sin), lors du montage sur le véhicule, est divisée par une rainure circonférentielle à largeur réduite (11) en une partie externe dans le sens de la largeur (12) et une partie interne dans le sens de la largeur (13), une largeur (W) de la partie externe dans le sens de la largeur étant inférieure à celle de la partie interne dans le sens de la largeur et ne représentant pas plus de 1/10 d'une largeur de la bande de roulement (W).

**13.** Bandage pneumatique, comportant une sculpture de bande de roulement asymétrique selon la revendication 12, dans lequel au moins un centre (C1) des centres de courbure de courbures constituant un profil (S1) d'une face latérale de la partie externe dans le sens de la largeur dans la bande de roulement, au niveau d'une section dans la direction de la largeur du bandage pneumatique, est positionné au niveau d'un côté externe (Sout) du bandage pneumatique, un centre de courbure (C2) d'une courbe constituant un profil (S2) de la partie interne dans le sens de la largeur étant positionné au niveau d'un côté interne du bandage pneumatique.

**14.** Bandage pneumatique, comportant une sculpture de bande de roulement asymétrique selon l'une quelconque des revendications 10 à 13, dans lequel une largeur (w10) de la rainure circonférentielle à largeur réduite (11) est progressivement élargie d'un fond de la rainure vers un côté de la surface de la bande de roulement.

**15.** Bandage pneumatique, comportant une sculpture de bande de roulement asymétrique selon l'une quelconque des revendications 10 à 14, dans lequel au moins une partie d'une zone comportant plusieurs trous (10) dans la partie d'appui (2a), au niveau du côté axialement interne lors du montage sur le véhicule, entre en contact avec le sol sous l'action d'une charge ne représentant pas moins de 70% d'une capacité de charge maximale du bandage pneumatique.

**16.** Bandage pneumatique, comportant une sculpture de bande de roulement asymétrique selon l'une quelconque des revendications 10 à 15, dans lequel une dimension d'ouverture (R) du trou (10) dans la partie d'appui (2a), au niveau du côté axialement interne lors du montage sur le véhicule, est agrandie vers une direction s'éloignant du plan équatorial (O) du bandage pneumatique.

**17.** Bandage pneumatique, comportant une sculpture de bande de roulement asymétrique selon l'une quelconque des revendications 10 à 16, dans lequel une distance (Q) entre les plusieurs trous (10) dans la partie d'appui (2a), au niveau du côté axialement interne lors du montage sur le véhicule, est réduite vers une direction s'éloignant du plan équatorial (O) du bandage pneumatique.

**18.** Bandage pneumatique, comportant une sculpture de bande de roulement asymétrique selon l'une quelconque des revendications 10 à 17, dans lequel une profondeur du trou (10) dans la partie d'appui (2a), au niveau du côté axialement interne lors de montage sur le véhicule, est accrue vers une direction s'éloignant du plan équatorial (O) du bandage pneumatique.

**19.** Bandage pneumatique, comportant une sculpture de bande de roulement asymétrique selon l'une quelconque des revendications 1 à 3 dans lequel , lorsque le bandage pneumatique est monté sur une roue dans laquelle un rapport de transmission d'une force radiale appliquée à une partie d'extrémité d'une jante, dans la direction de la largeur, vers un essieu, est supérieur au rapport de transmission similaire d'une force appliquée à l'autre partie d'extrémité de la jante dans la direction de la largeur, un volume total des rainures latérales, pouvant être formées dans une partie d'appui agencée au niveau d'un côté présentant un rapport de transmission élevé lors du montage sur la roue, parmi les parties d'appui définies entre la rainure circonférentielle et l'extrémité de la bande de roulement (T), par unité de largeur dans la direction de la largeur de la bande de roulement, sur l'ensemble de la circonférence de la bande de roulement, étant inférieur au volume total similaire des rainures latérales formées dans la partie d'appui agencée au niveau du côté de l'autre extrémité de la bande de roulement (T), la partie d'appui agencée au niveau d'un côté présentant un rapport de transmission élevé étant divisée par une rainure circonférentielle à largeur réduite (11) en une partie externe dans le sens de la largeur (12) et une partie interne dans le sens de la largeur (13), plusieurs trous (10), séparés de la rainure circonférentielle et des rainures latérales étant formés dans la partie interne dans le sens de la largeur (13).

**20.** Bandage pneumatique, comportant une sculpture de bande de roulement asymétrique selon la revendication 19, dans lequel une largeur de la rainure circonférentielle à largeur réduite (11) est progressivement élargie d'un fond de la rainure vers un côté d'une surface de la bande de roulement.

**21.** Bandage pneumatique, comportant une sculpture de bande de roulement asymétrique selon les revendications 19 ou 20, dans lequel une dimension d'ouverture de chacun des plusieurs trous (10) formés dans la partie interne dans le sens de la largeur (13) est accrue vers une direction s'éloignant du plan équatorial (O) du bandage pneumatique.

**22.** Bandage pneumatique, comportant une sculpture de bande de roulement asymétrique selon l'une quelconque des revendications 19 à 21, dans lequel une distance entre les plusieurs trous mutuels (10) formés dans la partie interne dans le sens de la largeur (13) est réduite vers une direction s'éloignant du plan équatorial (O) du bandage pneumatique.

**23.** Bandage pneumatique, comportant une sculpture de bande de roulement asymétrique selon l'une quelconque des revendications 19 à 22, dans lequel une profondeur de chacun des plusieurs trous (10) formés dans la partie interne dans le sens de la largeur (13), est accrue vers une direction s'éloignant du plan équatorial (O) du bandage pneumatique.

**24.** Bandage pneumatique, comportant une sculpture de bande de roulement asymétrique selon l'une quelconque des revendications 19 à 23, dans lequel au moins une partie d'une zone comportant plusieurs trous (10) dans la partie interne dans le sens de la largeur (13) entre en contact avec le sol sous l'action d'une charge ne représentant pas moins de 70% d'une capacité de charge maximale du bandage pneumatique.

**25.** Bandage pneumatique, comportant une sculpture de bande de roulement asymétrique selon l'une quelconque des revendications 19 à 24, dans lequel un centre (C2) des centres de courbure (C1, C2) de courbes constituant un profil (S2) d'une face latérale de la partie externe dans le sens de la largeur (13) dans la bande de roulement, au niveau d'une section dans la direction de la largeur du bandage pneumatique, est positionné au niveau d'un côté externe (Sout) du bandage pneumatique, un centre de courbure (C1) d'une courbe constituant un profil (S1) de la partie interne dans le sens de la largeur (12) étant positionné au niveau d'un côté interne (Sin) du bandage pneumatique.

**26.** Bandage pneumatique, comportant une sculpture de bande de roulement asymétrique selon l'une quelconque des revendications 1 à 3, dans lequel une surface de contact au sol effective du côté axialement interne (Sin) ou du côté axialement externe (Sout), dans un état dans lequel le bandage pneumatique est assemblé sur une jante approuvée et rempli d'une pression d'air normale et soumis à une charge correspondant à une capacité de charge maximale, est supérieure à celle de l'autre côté, une distance radiale entre une ligne tangentielle sur une surface externe de la bande de roulement perpendiculaire au plan équatorial (50) du bandage pneumatique et chacun des bords de contact au sol, dans la position de remplissage d'une pression d'air normale, étant supérieure dans le côté comportant une surface de contact au sol effective réduite à celle existant dans l'autre côté.

**27.** Bandage pneumatique, comportant une sculpture de bande de roulement asymétrique selon la revendication 26, dans lequel un rapport entre une grande surface et une surface réduite de la surface de contact au sol effective (S-grande/S-réduite) et un rapport entre une grande distance et une distance réduite de la distance radiale (H-grande/H-réduite) correspond à (S-grande/S-réduite) = A x (H-grande/H-petite), A étant une valeur comprise entre 1, 0 et 1, 4.

**28.** Procédé de montage d'un bandage pneumatique, comportant une sculpture de bande de roulement asymétrique, sur un véhicule par l'intermédiaire d'une suspension appliquant un carrossage négatif à temps complet ou selon les besoins, comprenant l'étape d'utilisation d'un bandage pneumatique selon l'une quelconque des revendications 1 à 27 dans une forme d'utilisation dans laquelle une rainure circonférentielle formée dans une région d'un côté axialement interne (Sin) par rapport à un plan équatorial (O) du bandage pneumatique, lors du montage sur un véhicule, et la plus proche du plan équatorial (O), chevauche une position telle qu'une longueur circonférentielle d'une région de contact au sol de la bande de roulement devient maximale lors de l'application d'un carrossage négatif au bandage pneumatique.

# FIG. 1

(a)

(b)

# FIG. 2

# FIG. 3

Axially inner side     Axially outer side

# FIG. 4

# FIG. 5

# FIG. 6

## FIG. 7

# FIG. 8

Axially inner side

Axially outer side

Axially inner side ⟵⟶ Axially outer side

TR

2a

3a  0  3b  2b

12 11 Ci 13

T

T

10

9a  9b

8

R

9a  9b

8

Q

8

w

1a  1b  1c

w0

W

# FIG. 9

C1  12  11  13  S2

S1

w10

C2

FIG. 10

# F/G. 11

$$\alpha 1 = F3 \ / \ F1$$
$$\alpha 2 = F3 \ / \ F2$$

# FIG. 12

(a)

Axially inner side    Axially outer side

Sin

Sout

(b)

W

Hin

L

Hout

EI

EO

0

# FIG. 13

(a)

(b)

(c)

# FIG. 14

(a)

(b)

(c)

# FIG. 15

(a)

(b)

(c)

# FIG. 16

# FIG. 17

Axially inner side

Axially outer side

# FIG. 18

Axially inner side

Axially outer side

# FIG. 19

Axially inner side

Axially outer side

# FIG. 20

Axially inner side

Axially outer side

## FIG. 21

Axially inner side

Axially outer side

## FIG. 22

Axially inner side

Axially outer side

# FIG. 23

FIG. 24

# F/G. 25

(a)

(b)

(c)

# FIG. 26

Axially inner side    Axially outer side

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10217719 A
- JP 3220004 B

- JP 6048120 B